# EUROPÄISCHE PATENTANMELDUNG

(11) **EP 4 582 207 A1**
(43) Veröffentlichungstag der Anmeldung: **09.07.2025**
(21) Anmeldenummer: 24206950.8
(22) Anmeldetag: 16.10.2024
(51) Int. Cl.: B23K 9/095, B23K 9/12, B23K 9/173

(54) **METALL-SCHUTZGAS-LICHTBOGENFÜGEGERÄT FÜR DAS HAND-LICHTBOGENFÜGEN, ZUSATZGERÄT FÜR EIN METALL-SCHUTZGAS-LICHTBOGENFÜGEGERÄT FÜR DAS HAND-LICHTBOGENFÜGEN, SOWIE VERFAHREN ZUM HÄNDISCHEN METALL-SCHUTZGAS-LICHTBOGENFÜGEN**

(71) Anmelder: FRONIUS INTERNATIONAL GmbH, 4643 Pettenbach (AT)
(72) Erfinder: Söllinger, Dominik, 4643 Pettenbach (AT)
(74) Vertreter: Bratovic, Nino Maria

(57) **Zusammenfassung**

Die Erfindung schafft ein Metall-Schutzgas-Lichtbogenfügegerät, ein Zusatzgerät für ein Metall-Schutzgas-Lichtbogenfügegerät, sowie ein Verfahren für das Hand-Lichtbogenfügen. Das Metall-Schutzgas-Lichtbogenfügegerät (100) umfasst:
- eine Handhabungseinheit (112);
- eine Haupt-Drahtzuführeinrichtung (110) zum Fördern einer lichtbogentragenden abschmelzenden Drahtelektrode, LBTAD (10), wobei zumindest eine Drahtendenführung (113) der Haupt-Drahtzuführeinrichtung (110) in die Handhabungseinheit (112) integriert ist; und
- eine mit der Handhabungseinheit (112) verbundene Zusatz-Drahtzuführeinrichtung (120) zum Fördern eines abschmelzenden Zusatzdrahts, AZD (20);
- wobei eine Drahtendenführung (123) der Zusatz-Drahtzuführeinrichtung (120) derart angeordnet und eingerichtet ist, dass der abschmelzende Zusatzdraht, AZD (20), bei dem Hand-Lichtbogenfügen an einem zu fügenden Werkstück (1, 2) derart auftrifft, dass er, während er angeschmolzen wird, auf das Werkstück (1, 2) eine Kraft (K) ausübt und somit eine Gegenkraft (GK) auf die Handhabungseinheit (112) erzeugt.

## Beschreibung

### Gebiet der Erfindung

Die Erfindung betrifft ein Metall-Schutzgas-Lichtbogenfügegerät für das Hand-Lichtbogenfügen, ein Zusatzgerät für ein Metall-Schutzgas-Lichtbogenfügegerät für das Hand-Lichtbogenfügen (insbesondere Handschweißen oder Handlöten), sowie Verfahren zum händischen Metall-Schutzgas-Lichtbogenfügen (d.h. insbesondere für ein Metall-Schutzgas-Handschweißen oder Metall-Schutzgas-Handlöten).

### Technischer Hintergrund

Viele Schweißaufgaben werden händisch durchgeführt, d.h., mittels Handschweißen. Die Qualität der Schweißnaht hängt dabei nicht nur von an dem Handschweißgerät eingestellten Parametern (z.B. Schweißparametern wie etwa Schweißstrom, Schweißspannung etc.) oder den verwendeten Materialien (Material des Werkstücks, Material eines etwaigen Zusatzdrahts, verwendetes Schutzgas) ab, sondern in hohem Maße auch von der Führung des Handschweißgeräts durch den Nutzer.

In einem typischen Umfeld, in welchem Handschweißen durchgeführt wird, sind die Möglichkeiten, einen Schweißer zur Verbesserung der Schweißnaht zu instruieren oder zu beeinflussen, häufig aufgrund von Lärm und anderen Ablenkungen begrenzt; darüber hinaus trägt der Schweißer für gewöhnlich eine Schweißmaske mit eingeschränktem Sichtfeld und ist visuell stark auf die Schweißnaht fixiert. Ähnliche Herausforderungen ergeben sich bei anderen Formen des Hand-Lichtbogenfügens, etwa beim Hand-Lichtbogenlöten.

### Zusammenfassung der Erfindung

Nach all dem Vorangehenden ist es daher eine Aufgabe der vorliegenden Erfindung, ein verbessertes Metall-Schutzgas-Lichtbogenfügegerät für das Hand-Lichtbogenfügen, ein verbessertes Zusatzgerät für ein Metall-Schutzgas-Lichtbogenfügegerät für das Hand-Lichtbogenfügen, sowie verbesserte Verfahren zum händischen Metall-Schutzgas-Fügen (oder: Metall-Schutzgas-Handfügen, insbesondere Metall-Schutzgas-Hand-Lichtbogenschweißen oder Metall-Schutzgas-Hand-Lichtbogenlöten) bereitzustellen. Die Verbesserung betrifft dabei insbesondere, wie eine optimale Handhabung, oder Führung, des Hand-Lichtbogenfügegeräts durch den Nutzer erzielt werden kann, und eine Verbesserung der Mensch-Maschine-Interaktion.

Diese Aufgabe wird durch die Gegenstände der unabhängigen Patentansprüche gelöst.

Dementsprechend wird gemäß einem ersten Aspekt der Erfindung ein Metall-Schutzgas-Lichtbogenfügegerät, MSLBFG, für das Hand-Lichtbogenfügen bereitgestellt, umfassend:
- eine Handhabungseinheit;
- eine Haupt-Drahtzuführeinrichtung zum Fördern einer lichtbogentragenden abschmelzenden Drahtelektrode, LBTAD, wobei zumindest eine Drahtendenführung der Haupt-Drahtzuführeinrichtung in die Handhabungseinheit integriert ist; und
- eine mit der Handhabungseinheit verbundene Zusatz-Drahtzuführeinrichtung zum Fördern eines abschmelzenden Zusatzdrahts, AZD;
- wobei eine Drahtendenführung der Zusatz-Drahtzuführeinrichtung derart angeordnet und eingerichtet ist, dass der abschmelzende Zusatzdraht, AZD, bei dem Hand-Lichtbogenfügen an einem (oder: auf einem) zu fügenden Werkstück derart auftritt, dass er, während er angeschmolzen wird, auf das Werkstück eine Kraft ausübt und somit eine Gegenkraft auf die Handhabungseinrichtung erzeugt. Der AZD kann dabei insbesondere außerhalb des Lichtbogens oder in einem Randbereich des Lichtbogens angeschmolzen werden.

Die jeweilige Drahtzuführeinrichtung (d.h. Haupt-Drahtzuführeinrichtung bzw. Zusatz-Drahtzuführeinrichtung) kann - unter anderem - jeweils eine mechanische Drahtendenführung (z.B. gebildet durch ein Kontaktrohr) und eine zugehörige Drahtvorschubeinrichtung (z.B. einen Push-Pull-Motor) zum Fördern des Drahts (zumindest vorwärts, ggfs. vorwärts und rückwärts) umfassen.

Die Drahtendenführung ist jeweils das Element, welches die letzte Führung des Drahtendes des jeweiligen Drahts (lichtbogentragende abschmelzende Drahtelektrode, LBTAD, bzw. abschmelzender Zusatzdraht, AZD) vornimmt, bevor der jeweilige Draht auf das Werkstück tritt. Die Drahtendenführung kann auch als dasjenige Element definiert werden, welches eine jeweilige Förderrichtung endgültig vorgibt. Darüber hinaus kann die jeweilige Drahtzuführeinrichtung auch noch weitere Drahtführungen umfassen, welche zwischen der jeweiligen Drahtquelle (z.B. einer Drahtrolle oder einem Drahtfass) und der jeweiligen Drahtendenführung angeordnet sind.

Bei Metall-Schutzgas-Lichtbogenfügegeräten ist die Drahtendenführung der lichtbogentragenden abschmelzenden Drahtelektrode, LBTAD, typischerweise als Kontaktrohr ausgebildet, mittels welchem die LBTAD mit einem elektrischen Potenzial (z.B. Schweißplus) beaufschlagt wird. Somit ist die Drahtendenführung für gewöhnlich konzentrisch innerhalb einer Schutzgasdüse der Handhabungseinheit angeordnet. Die Drahtendenführung der Zusatz-Drahtzuführeinrichtung kann ebenso in die Handhabungseinheit integriert sein, oder seitlich, beispielsweise als ein Ausleger, an der Handhabungseinheit montiert sein. Der Ausleger kann beispielsweise seitlich an der Handhabungseinheit befestigt sein.

Die Handhabungseinheit wird bei Metall-Schutzgas-Lichtbogenschweißgeräten typischerweise als "Schweißbrenner" bezeichnet. Diese Handhabungseinheit ist es, die ein Benutzer (z.B. ein Schweißer) händisch führt. Da erfindungsgemäß die Drahtendenführung der Haupt-Drahtzuführeinrichtung in die Handhabungseinheit integriert ist, und die Drahtendenführung der Zusatz-Drahtzuführeinrichtung mit der Handhabungseinheit verbunden ist, werden durch das händische Führen der Handhabungseinheit somit beide Drahtendenführungen gleichzeitig und gemeinsam bewegt.

Das Anschmelzen des abschmelzenden Zusatzdrahts, AZD, erfolgt vorteilhaft durch Energie, welche auf den an der lichtbogentragenden abschmelzenden Drahtelektrode, LBTAD, brennenden Lichtbogen zurückgeht. Beispielsweise kann der abschmelzende Zusatzdraht, AZD, im Zentrum des Lichtbogens angeschmolzen werden, in dessen Randbereich angeschmolzen werden, außerhalb des Lichtbogens von dessen Wärmestrahlung angeschmolzen werden, oder auch am Werkstück durch das erwärmte Werkstück und/oder ein am Werkstück beim Hand-Lichtbogenfügen gebildetes Schmelzbad angeschmolzen werden. Jeweils alternativ oder nachfolgend kann der abschmelzende Zusatzdraht, AZD, durch jede dieser Varianten bzw. an jeder dieser Positionen auch abgeschmolzen werden.

Eine grundlegende Idee der vorliegenden Erfindung besteht darin, dass der abschmelzende Zusatzdraht, AZD, dazu verwendet wird, eine Gegenkraft auf die Drahtendenführung der Zusatz-Drahtzuführeinrichtung zu bewirken, wodurch automatisch auch eine Kraft auf die mit dieser (insbesondere starr) verbundenen Handhabungseinheit ausgeübt wird. Diese Gegenkraft verspürt somit ein Nutzer des Metall-Schutzgas-Lichtbogenfügegeräts, MSLBFG, welcher die Handhabungseinheit händisch führt. Auf diese Weise kann sich der Nutzer beim händischen Festlegen der Fügegeschwindigkeit - also der Geschwindigkeit, mit welcher die Handhabungseinheit entlang der zu erzeugenden Fügenaht bewegt wird - von dieser Kraft leiten lassen.

Anders ausgedrückt wird einem Nutzer des Metall-Schutzgas-Lichtbogenfügegeräts, MSLBFG (z.B. einem Schweißer) über die Gegenkraft ein intuitiv verständliches haptisches Feedback bereitgestellt, welches eine verbesserte Mensch-Maschine-Interaktion ermöglicht. Insbesondere in Montagehallen oder dergleichen, wo akustische Signale schwer vernehmbar sind, und beim Lichtbogenfügen, wo das Augenmerk des Nutzers auf der Fügenaht liegen sollte, ist das haptische Feedback für den Nutzer gut, zusätzlich, nämlich in einem bislang wenig verwendeten Wahrnehmungskanal, vernehmbar.

Durch eine entsprechende Abstimmung der momentanen oder mittleren Drahtvorschubgeschwindigkeiten der Haupt- und der Zusatz-Drahtzuführeinrichtung, insbesondere unter Berücksichtigung eines vorbestimmten oder verstellbaren Winkels zwischen einer Förderrichtung der Haupt-Drahtzuführeinrichtung und einer Förderrichtung der Zusatz-Drahtzuführeinrichtung, kann erreicht werden, dass der Nutzer durch das haptische Feedback geführt wird und die Handhabungseinheit mit einer optimalen Fügegeschwindigkeit bewegt.

Hierzu wird der abschmelzende Zusatzdraht, AZD, auf das Werkstück derart hingeführt, und von der Handhabungseinheit des Metall-Schutzgas-Lichtbogenfügegeräts, MSLBFG, der Lichtbogen derart an der lichtbogentragenden abschmelzenden Drahtelektrode, LBTAD, erzeugt, dass der abschmelzende Zusatzdraht, AZD, während er angeschmolzen wird, noch so weit im feststofflichen Zustand mit einem gewissen, von der zweiten Drahtvorschubgeschwindigkeit abhängigen Impuls (im physikalischen Sinn) auf das Werkstück trifft, dass er eine Kraft auf das Werkstück ausübt. Ein vollständiges Abschmelzen des AZDs kann dann jeweils später erfolgen, wenn jeweils ein angeschmolzener, bereits auf dem Werkstück abgelegter (oder: auf das Werkstück aufgetragener) Abschnitt des AZDs infolge der Bewegung der Handhabungseinheit in den Lichtbogen, oder in ein Zentrum des Lichtbogens, eintritt, während der nächste Abschnitt des AZDs gleichzeitig angeschmolzen wird.

Bei dem Metall-Schutzgas-Lichtbogenfügegerät, MSLBFG, kann es sich somit insbesondere um ein Metall-Schutzgas-Hand-Lichtbogenfügegerät handeln, besonders bevorzugt um ein Metall-Schutzgas-Handschweißgerät oder ein Metall-Schutzgas-Handlötgerät. Bei dem Metall-Schutzgas-Schweißen kann es sich um Metall-Inertgas-Schweißen (MIG), um Metall-Aktivgas-Schweißen (MAG), um Metall-Inertgas-Löten, oder um Metall-Aktivgas-Löten handeln.

Die Drahtendenführung der Zusatz-Drahtzuführeinrichtung und die Handhabungseinrichtung sind bevorzugt starr miteinander verbunden, sodass die auf die Drahtendenführung der Zusatz-Drahtzuführeinrichtung einwirkende Gegenkraft im Wesentlichen, oder vollständig, und direkt an die Handhabungseinheit weitergegeben wird. Da der Nutzer die Handhabungseinheit händisch führt, gelangt das haptische Feedback somit in einfacher aber zuverlässiger Weise an den Schweißer. Wenn der Schweißer die Handhabungseinheit locker im festen Abstand zum Werkstück hält, kann die Handhabungseinheit durch die Kraftkomponente der Gegenkraft parallel zur Fügerichtung bewegt werden.

Die starre Verbindung kann fix sein, d.h., dass eine relative Stellung der Drahtendenführung der Zusatz-Drahtzuführeinrichtung zur Handhabungseinheit nicht veränderbar ist, oder sie kann verstellbar ausgeführt sein, wobei sie in der jeweils eingestellten Stellung dann wiederum festgestellt werden kann, etwa durch eine Rasteinrichtung, damit für das Schweißen wieder eine starre Verbindung vorliegt.

Eine Veränderung der Stellung zwischen den Drahtendenführungen kann auch dadurch vorgesehen sein, dass zwar die Drahtendenführung der Zusatz-Drahtzuführeinrichtung fix mit der Handhabungseinheit verbunden ist, jedoch die Stellung der Drahtendenführung der Haupt-Drahtzuführeinrichtung relativ zu der Handhabungseinheit verstellbar ist. Schließlich kann auch beides vorgesehen sein: sowohl eine Einstellung der relativen Stellung der Drahtendenführung der Zusatz-Drahtzuführeinrichtung zu der Handhabungseinheit, als auch der relativen Stellung der Drahtendenführung der Haupt-Drahtzuführeinrichtung zu der Handhabungseinheit.

Die jeweilige Drahtvorschubeinrichtung der Haupt-Drahtzuführeinrichtung bzw. der Zusatz-Drahtzuführeinrichtung kann jeweils separat von der zugehörigen Drahtendenführung angeordnet sein, und mit der jeweiligen Drahtendenführung unter anderem über eine Drahtseele und/oder ein Schlauchpaket verbunden sein. Die Drahtvorschubeinrichtung der Haupt-Drahtzuführeinrichtung beispielsweise ist häufig als externe Einheit ausgeführt. Denkbar wäre aber auch, dass die Drahtzuführeinrichtung in eine Stromquelle des Metall-Schutzgas-Lichtbogenfügegeräts (z.B. eine Schweißstromquelle) integriert ist.

Im Vorangehenden und im Folgenden werden Begriffe mitunter mit Akronymen abgekürzt, etwa "AZD" für "abschmelzender Zusatzdraht" oder "LBTAD" für "lichtbogentragende abschmelzende Drahtelektrode". Üblicherweise wird die Langfassung verwendet, gefolgt von dem zugehörigen Akronym. In manchen Fällen wird jedoch, um die Lesbarkeit zu verbessern, lediglich das Akronym verwendet werden, während in anderen Fällen auf das Akronym verzichtet wird. Akronym und Langfassung sollen in jedem Fall gleichbedeutend sein.

Gemäß einigen bevorzugten Ausführungsformen, Varianten oder Verfeinerungen von Ausführungsformen ist die Haupt-Drahtzuführeinrichtung zum Fördern der lichtbogentragenden abschmelzenden Drahtelektrode, LBTAD, entlang einer ersten Förderrichtung eingerichtet und die Zusatz-Drahtzuführeinrichtung zum Fördern des abschmelzenden Zusatzdrahts, AZD, entlang einer zweiten Förderrichtung eingerichtet, und die zweite Förderrichtung ist von der ersten Förderrichtung verschieden. Insbesondere sind die erste und die zweite Förderrichtung nicht parallel sondern beispielsweise windschief zueinander angeordnet, oder in einer Ebene angeordnet und stehen darin in einem Winkel von zwischen 5° und 95° zueinander (d.h. schneiden sich in diesem Winkel). Die Verschiedenheit der ersten und der zweiten Förderrichtung ist insbesondere durch die relative Stellung der Drahtendenführung der Zusatz-Drahtzuführeinrichtung, der Handhabungseinheit, sowie der Drahtendenführung der Haupt-Drahtzuführeinrichtung realisierbar.

Gemäß einigen bevorzugten Ausführungsformen, Varianten oder Verfeinerungen von Ausführungsformen stehen die erste Förderrichtung und die zweite Förderrichtung zueinander in einem Winkel α zwischen 10° und 80°, insbesondere in einem Winkel zwischen 25° und 70°, besonders bevorzugt in einem Winkel zwischen 30 und 60°. Es hat sich herausgestellt, dass Winkel α in diesen Bereichen eine besonders einfache Abstimmung zwischen den jeweiligen (momentanen oder mittleren) Drahtvorschubgeschwindigkeiten entlang der jeweiligen Förderrichtung und sonstigen Schweißparametern des Metall-Schutzgas-Lichtbogenfügegeräts, MSLBFG, ermöglichen. Diese Winkelstellung wird vorzugsweise durch die relative Anordnung longitudinaler Achsen der Drahtendenführung der Haupt-Drahtzuführeinrichtung und der Drahtendenführung der Zusatz-Drahtzuführeinrichtung erzielt, entlang welcher der jeweilige Drahtvorschub an der Spitze erfolgt.

Gemäß einigen bevorzugten Ausführungsformen, Varianten oder Verfeinerungen von Ausführungsformen ist die Zusatz-Drahtzuführeinrichtung dazu ausgebildet, eine freistehende Länge des abschmelzenden Zusatzdrahts, AZD (engl. CTWD, "contact tip to workpiece distance") derart einzustellen, dass der AZD sich zwischen der Drahtendenführung der Zusatz-Drahtzuführeinrichtung und dem Werkstück durchbiegt, insbesondere um 10° oder mehr, insbesondere 20° oder mehr.

Die Zusatz-Drahtzuführeinrichtung kann auch dazu ausgebildet sein, die CTWD des AZD derart einzustellen, dass sich der AZD zwischen der Drahtendenführung der Zusatz-Drahtzuführeinrichtung und dem Werkstück mit einem Radius R verbiegt, welcher insbesondere zwischen 50 mm und 350 mm, bevorzugt zwischen 150 mm und 250 mm liegt. Auf diese Weise kann die Kraft auf das Werkstück bezüglich der ersten Förderrichtung in noch einem höheren Winkel als dem Winkel α zwischen den Förderrichtungen auftreffen, sodass noch eine größere Kraftkomponente der Gegenkraft in Richtung der Fügerichtung wirkt.

Gemäß einigen bevorzugten Ausführungsformen, Varianten oder Verfeinerungen von Ausführungsformen sind die Drahtendenführung der Haupt-Drahtzuführeinrichtung und die Drahtendenführung der Zusatz-Drahtzuführeinrichtung zueinander derart angeordnet, dass die lichtbogentragende abschmelzende Drahtelektrode, LBTAD, und der abschmelzende Zusatzdraht, AZD, während des Hand-Lichtbogenfügens in einem Abstand von mindestens 1 mm, bevorzugt mindestens 4 mm, besonders bevorzugt mindestens 6 mm, voneinander mit dem Werkstück in Kontakt kommen. Es wurde festgestellt, dass geringere Abstände bewirken, dass der AZD im Zentrum des Lichtbogens angeordnet ist, und daher zu schnell abschmilzt. Da sich der Lichtbogen innerhalb des Schutzgaskegels befindet, beeinflusst in diesem Fall dann auch das ausströmende Schutzgas den im Schmelzen begriffenen AZD in ungünstiger Weise, was die Kräftegeometrie weiter verschlechtert.

Es versteht sich außerdem, dass ein maximaler Abstand dabei jeweils dadurch gegeben ist, dass der abschmelzende Zusatzdraht, AZD, an seinem Kontaktpunkt (oder: Berührungspunkt) mit dem Werkstück auch noch innerhalb des Schutzgaskegels angeordnet sein muss.

Das Anschmelzen des abschmelzenden Zusatzdrahts, AZD, kann innerhalb des Lichtbogens (typischerweise in dessen Randbereich) erfolgen. Alternativ kann die Handhabungseinheit derart eingerichtet sein, oder in einem erfindungsgemäßen Verfahren so betrieben werden, dass eine Erwärmung des Werkstücks oder des Schmelzbads bereits ausreichend ist, dass der AZD angeschmolzen wird, beispielsweise erst bei Kontakt mit dem Werkstück oder dem Schmelzbad. Insbesondere wenn der AZD gegen das Werkstück gebogen wird (in Richtung der lichtbogentragenden abschmelzenden Drahtelektrode), wird somit in einfacher Weise erreicht, dass der AZD, nachdem er angeschmolzen wurde und einen Impuls an das Werkstück abgegeben hat, danach in den Lichtbogen eintritt und dort vollends abgeschmolzen und z.B. mit dem Schmelzbad vermengt wird.

Die Handhabungseinheit ist bevorzugt dazu eingerichtet, so geführt zu werden, dass der abschmelzende Zusatzdraht, AZD, der lichtbogentragenden abschmelzenden Drahtelektrode sowie dem Schmelzbad in Fügerichtung immer vorangeht.

Gemäß einigen bevorzugten Ausführungsformen, Varianten oder Verfeinerungen von Ausführungsformen sind die Drahtendenführung der Haupt-Drahtzuführeinrichtung und die Drahtendenführung der Zusatz-Drahtzuführeinrichtung zueinander derart angeordnet, dass der abschmelzende Zusatzdraht, AZD, nicht in ein Zentrum des Lichtbogens gefördert wird, sondern lediglich in einem Randbereich des Lichtbogens.

Gemäß einigen bevorzugten Ausführungsformen, Varianten oder Verfeinerungen von Ausführungsformen sind die Haupt-Drahtzuführeinrichtung und die Zusatz-Drahtzuführeinrichtung derart eingerichtet, dass die Haupt-Drahtzuführeinrichtung die lichtbogentragende abschmelzende Drahtelektrode, LBTAD, während des Schweißens mit einer ersten mittleren Vorschubgeschwindigkeit fördert und die Zusatz-Drahtzuführeinrichtung den abschmelzenden Zusatzdraht, AZD, mit einer zweiten mittleren Vorschubgeschwindigkeit fördert, wobei sich die erste und die zweite mittlere Vorschubgeschwindigkeit zeitweise oder stets voneinander unterscheiden.

Unter einer mittleren Drahtvorschubgeschwindigkeit soll hierbei insbesondere eine Drahtvorschubgeschwindigkeit verstanden werden, welche über einen Teilabschnitt innerhalb eines bestimmten Schweißprozesses gemittelt wurde, beispielsweise über einen Teilabschnitt, welcher eine (insbesondere genau eine) Vorwärtsbewegung und/oder eine (insbesondere genau eine) Rückwärtsbewegung der Drahtelektrode umfasst. Bei einem CMT-Verfahren beispielsweise erfolgt eine periodische Vor- und Zurückbewegung der lichtbogentragenden abschmelzenden Drahtelektrode, LBTAD, welcher insgesamt eine Vorwärtsbewegung der LBTAD überlagert ist, um das abgeschmolzene Material auszugleichen. Hierdurch ergibt sich, gemittelt über die Vor- und Zurückbewegung, insgesamt eine positive mittlere Drahtvorschubgeschwindigkeit.

Gemäß einigen bevorzugten Ausführungsformen, Varianten oder Verfeinerungen von Ausführungsformen ist die erste mittlere Drahtvorschubgeschwindigkeit nicht-konstant und/oder die zweite mittlere Drahtvorschubgeschwindigkeit nicht-konstant. Auf diese Weise können unterschiedliche Fügeprogramme durchgeführt werden, und die auf die Zusatz-Drahtzuführeinrichtung ausgeübte Gegenkraft kann stets optimal eingestellt werden. Beispielsweise kann die ausgeübte Gegenkraft so periodisch ausgebildet werden, etwa um ein geschupptes Erscheinungsbild der Fügenacht, insbesondere Schweißnaht, zu erzeugen. Die Fügeprogramme können gleichförmig verlaufen, oder unterschiedliche Prozessphasen aufweisen.

Gemäß einigen bevorzugten Ausführungsformen, Varianten oder Verfeinerungen von Ausführungsformen werden die erste und/oder die zweite mittlere Drahtvorschubgeschwindigkeit zumindest abschnittsweise periodisch beschleunigt und verzögert. Auf diese Weise kann eine Vielzahl von hochentwickelten Fügeprogrammen durchgeführt werden, beispielsweise ein Cold-Metal-Transfer(CMT-)-Schweißprogramm oder ein Mix-CMT-Schweißprogramm (d.h. CMT in Abwechslung mit anderen Schweißprogrammen), Impulslichtbogen und Standardlichtbogen.

Gemäß einigen bevorzugten Ausführungsformen, Varianten oder Verfeinerungen von Ausführungsformen beträgt die erste mittlere Drahtvorschubgeschwindigkeit zwischen dem 1,5-fachen und dem 150-fachen der zweiten mittleren Drahtvorschubgeschwindigkeit, insbesondere zwischen dem 20-fachen und dem 40-fachen. Es hat sich herausgestellt, dass in diesen Bereichen eine besonders gute Abstimmung der Drahtvorschubgeschwindigkeiten dahingehend vorliegt, dass der abschmelzende Zusatzdraht, AZD, im richtigen Verhältnis zu der lichtbogentragenden abschmelzenden Drahtelektrode, LBTAD, angeschmolzen (und schließlich abgeschmolzen) wird, um eine passend dimensionierte Gegenkraft auf die Zusatz-Drahtzuführeinrichtung zu erzielen.

Die erste mittlere Drahtvorschubgeschwindigkeit, also diejenige, mit welcher die lichtbogentragende abschmelzende Drahtelektrode, LBTAD, durchschnittlich gefördert wird, ist bevorzugt 10 m/min oder größer, besonders bevorzugt 15m/min beispielsweise 22 m/min oder größer, etwa 25 m/min oder größer. Für Dünnblechanwendungen kann die erste mittlere Drahtvorschubgeschwindigkeit beispielsweise zwischen 3 m/min und 7 m/min, insbesondere 5 m/min, betragen, und die zugehörige zweite mittlere Drahtvorschubgeschwindigkeit zwischen 0.4 m/min und 0.8 m/min, insbesondere 0.6 m/min betragen.

Gemäß einigen bevorzugten Ausführungsformen, Varianten oder Verfeinerungen von Ausführungsformen umfasst das Metall-Schutzgas-Lichtbogenfügegerät, MSLBFG, eine verstellbare Halterung, über welche die Drahtendenführung der Zusatz-Drahtzuführeinrichtung mit der Handhabungseinheit gekoppelt ist, und mittels welcher der Winkel α zwischen der ersten Förderrichtung und der zweiten Förderrichtung einstellbar ist, insbesondere innerhalb eines der genannten Winkelbereiche. Die relative Stellung der Drahtendenführung der Haupt-Drahtzuführeinrichtung zu der Handhabungseinheit ist hierfür vorteilhaft fix.

Über den Winkel α ist die Kräftegeometrie einstellbar, sodass die auf die Drahtendenführung der Zusatz-Drahtzuführeinrichtung ausübte Gegenkraft auch (zu einem gewissen Grad) unabhängig von der jeweils eingestellten zweiten Drahtvorschubgeschwindigkeit angepasst werden kann. Für die Höhe der Kraftkomponente der Gegenkraft in Fügerichtung ist der Winkel ausschlaggebend, in welchem der abschmelzende Zusatzdraht, AZD, auf das Werkstück auftrifft. Dieser wird dem Nutzer des Metall-Schutzgas-Lichtbogenfügegeräts durch dessen Geometrie, insbesondere durch den Winkel α, weitgehend vorgegeben.

Gemäß einigen bevorzugten Ausführungsformen, Varianten oder Verfeinerungen von Ausführungsformen ist die Haupt-Drahtzuführeinrichtung dazu eingerichtet, die erste mittlere Drahtvorschubgeschwindigkeit gemäß unterschiedlichen Prozessphasen unterschiedlich einzustellen. Beispielsweise kann die Haupt-Drahtzuführeinrichtung einen so genannten Synchropuls durchführen, bei dem mit hoher Frequenz (insbesondere zwischen 0,1 Hz und 50 Hz) zwischen zwei Arbeitspunkten mit hohem bzw. niedrigem Schweißstrom gependelt (und entsprechend hohem bzw. niedriger mittlerer erster Drahtvorschubgeschwindigkeit) wird. Bei den Prozessphasen kann es sich insbesondere um unterschiedliche Fügeprozessphasen, etwa unterschiedliche Schweißprozessphasen handeln.

Die Zusatz-Drahtzuführeinrichtung kann vorteilhaft dazu eingerichtet sein, die zweite mittlere Drahtvorschubgeschwindigkeit synchronisiert zu den Prozessphasen der Haupt-Drahtzuführeinrichtung anzupassen. Die zweite Drahtvorschubgeschwindigkeit kann konstant sein, während sich die erste Drahtvorschubgeschwindigkeit gemäß Prozessphasen (insbesondere periodisch) verändert, oder sie kann sich periodisch verändern, während die erste Drahtvorschubgeschwindigkeit konstant bleibt. Erste und zweite Drahtvorschubgeschwindigkeit können auch beide konstant bleiben, oder sich beide gemäß Prozessphasen periodisch verändern. Dementsprechend kann auch die Zusatz-Drahtzuführeinrichtung dazu eingerichtet sein, die zweite Drahtvorschubgeschwindigkeit gemäß unterschiedlichen Prozessphasen einzustellen.

Gemäß einigen bevorzugten Ausführungsformen, Varianten oder Verfeinerungen von Ausführungsformen umfasst das Metall-Schutzgas-Lichtbogenfügegerät, MSLBFG, ferner eine Benutzerschnittstelle und ein Anpassungsmodul. Mittels der Benutzerschnittstelle ist mindestens ein Parameter einer durchzuführenden Fügeaufgabe (z.B. Schweißaufgabe oder Lötaufgabe), insbesondere eine Nahtdicke, ein a-Maß, ein Öffnungswinkel einer V-Naht, eine Dicke eines Werkstücks, ein Durchmesser der LBTAD oder des AZD, oder eine gewünschte Fügegeschwindigkeit, einstellbar und/oder eingebbar.

Die Benutzerschnittstelle kann in die Handhabungseinheit des Metall-Schutzgas-Lichtbogenfügegeräts, MSLBFG, integriert sein, in eine Stromquelle des Metall-Schutzgas-Lichtbogenfügegeräts, MSLBFG, in eine kabelgebundene oder kabellose Fernsteuerung, in eine App für ein Smartphone oder Tablet, und/oder dergleichen mehr.

Das Anpassungsmodul ist bevorzugt dazu eingerichtet, die Haupt-Drahtzuführeinrichtung und/oder die Zusatz-Drahtzuführeinrichtung in Abhängigkeit von dem (insbesondere über die Benutzerschnittstelle) eingestellten und/oder eingegebenen mindestens einen Parameter zu steuern, insbesondere eine jeweilige (momentane und/oder mittlere) Drahtvorschubgeschwindigkeit einzustellen (d.h. die erste Drahtvorschubgeschwindigkeit für die Haupt-Drahtzuführeinrichtung und/oder die zweite Drahtvorschubgeschwindigkeit für die Zusatz-Drahtzuführeinrichtung).

Beispielsweise kann das Einstellen des Parameters (z.B. eine Erhöhung der Lichtbogenleistung) für ein optimales Schweißergebnis eine höhere Fügegeschwindigkeit erfordern. Als Reaktion darauf kann die zweite mittlere Drahtvorschubgeschwindigkeit durch die Zusatz-Drahtzuführeinrichtung erhöht werden, um die Gegenkraft auf die Zusatz-Drahtzuführeinrichtung zu erhöhen. Auf diese Weise bekommt ein Nutzer des Metall-Schutzgas-Lichtbogenfügegeräts, MSLBFG, ein intuitiv verständliches, haptisches Feedback über die empfohlene Erhöhung der Schweißgeschwindigkeit, in Form einer erhöhten Kraftkomponente in Richtung der Fügerichtung (z.B. Schweißrichtung).

Beispielsweise kann über die Benutzerschnittstelle auch eine gewünschte Fügegeschwindigkeit der durchzuführenden Fügeaufgabe eingegeben werden, woraufhin automatisch die mittlere zweite Drahtvorschubgeschwindigkeit des abschmelzenden Zusatzdrahts, AZD, entsprechend eingestellt wird. Auf diese Weise kann beispielsweise eine gewünschte Taktzeit und/oder eine Streckenenergie vorgegeben oder erreicht werden. Selbstverständlich kann über die Benutzerschnittstelle auch eine momentane oder mittlere zweite Drahtvorschubgeschwindigkeit eingestellt, oder eine Taktzeit oder eine Streckenenergie eingegeben werden.

Gemäß einigen bevorzugten Ausführungsformen, Varianten oder Verfeinerungen von Ausführungsformen umfasst das Metall-Schutzgas-Lichtbogenfügegerät, MSLBFG, außerdem eine Steuereinrichtung, mittels welcher sowohl die Haupt-Drahtzuführeinrichtung als auch die Zusatz-Drahtzuführeinrichtung, insbesondere miteinander koordiniert und besonders bevorzug synchronisiert, steuerbar sind. Die Steuereinrichtung kann mit der im Vorangehenden genannten Benutzerschnittstelle und/oder dem im Vorangehenden genannten Anpassungsmodul gekoppelt oder zur Kommunikation verbunden sein, oder die Benutzerschnittstelle und/oder das Anpassungsmodul umfassen.

Vorteilhaft wird bei jeder Änderung mindestens eines Parameters der Haupt-Drahtzuführeinrichtung durch das Anpassungsmodul stets automatisch geprüft, ob eine entsprechende Anpassung desselben und/oder eines anderen Parameters der Zusatz-Drahtzuführeinrichtung notwendig ist, und diese Anpassung gegebenenfalls durchgeführt, und/oder umgekehrt. Die Steuereinrichtung ist insbesondere zur Steuerung der jeweiligen Drahtvorschubeinrichtung der Haupt- bzw. Zusatz-Drahtzuführeinrichtung eingerichtet, um die jeweilige (mittlere oder momentane) Drahtvorschubgeschwindigkeit einzustellen.

Eine solche Steuereinrichtung kann als eine beliebige Vorrichtung realisiert sein oder werden, welche zum Rechnen, und insbesondere zum Ausführen einer Software, einer App, oder eines Algorithmus in der Lage ist. Die Steuereinrichtung kann beispielsweise mindestens eine Prozessoreinheit aufweisen, z. B. eine Zentralprozessoreinheit (CPU) und/oder eine Graphikprozessoreinheit (GPU) und/oder eine Feldprogrammierbare Logikschaltung (FPGA) und/oder eine anwendungsspezifische integrierte Schaltung (ASIC) und/oder eine Kombination davon. Die Steuereinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist.

Die Steuereinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform. Die Steuereinrichtung kann beispielsweise in die Handhabungseinheit (z.B. einen Schweißbrenner) oder eine Stromquelle des Metall-Schutzgas-Lichtbogenfügegeräts, MSLBFG, integriert sein, oder separat davon vorgesehen werden. Die Steuereinrichtung kann eine Benutzerschnittstelle aufweisen, mittels welcher ein Nutzer der Steuereinrichtung Anweisungen geben kann, beispielsweise ein Fügeprogramm auswählen und/oder mindestens einen Parameter der Haupt-Drahtzuführeinrichtung und/oder der Zusatz-Drahtzuführeinrichtung einstellen kann.

Gemäß einigen bevorzugten Ausführungsformen, Varianten oder Verfeinerungen von Ausführungsformen weist die Steuereinrichtung ein Lichtbogen-Detektionsmodul auf, mittels welchem feststellbar ist, ob aktuell ein Lichtbogen an der lichtbogentragenden abschmelzenden Drahtelektrode, LBTAD, brennt. Hierzu kann ein beliebiges im Stand der Technik bekanntes Verfahren zum Detektieren eines Lichtbogens verwendet werden, beispielsweise Verfahren, welche den Schweißstrom und/oder die Schweißspannung überwachen und darauf basierend das Vorliegen oder Erlöschen des Lichtbogens bestimmen.

Die Steuereinrichtung kann dazu eingerichtet sein, die Zusatz-Drahtzuführeinrichtung zu steuern, den abschmelzenden Zusatzdraht, AZD, höchstens dann zu fördern, wenn gemäß dem Lichtbogen-Detektionsmodul aktuell ein Lichtbogen brennt. Auf diese Weise verschwindet auch die auf die Zusatz-Drahtzuführeinrichtung wirkende Gegenkraft, wenn der Lichtbogen erlischt. Damit erhält ein Nutzer des Metall-Schutzgas-Lichtbogenfügegeräts, MSLBFG, sofort ein intuitives haptisches Feedback, dass der Fügevorgang unterbrochen ist.

Wenn hierin von "Modulen" oder "Schnittstellen" die Rede ist, versteht es sich, dass dies nicht notwendiger Weise bedeutet, dass solche Module oder Schnittstellen als separate Einheiten getrennt voneinander ausgebildet sind.

In Fällen, in denen Module oder Schnittstellen als Software ausgebildet sind, können die Module oder Schnittstellen als Programmcode-Abschnitte oder Programmcode-Bestandteile realisiert sein, welche voneinander unterscheidbar sein können, aber welche auch ineinander verwoben sein können.

Ebenso gilt, dass in Fällen, in denen ein oder mehrere Module oder Schnittstellen als Hardware realisiert sind, die Funktionen eines oder mehrerer Module oder Schnittstellen durch eine und dieselbe Hardware-Komponente realisiert sein können.

Alternativ oder zusätzlich können verschiedene Funktionen eines einzelnen Moduls oder einer einzelnen Schnittstelle, oder auch verschiedene Funktionen verschiedener Module oder verschiedener Schnittstellen, auf ein oder mehreren separaten Hardware-Komponenten realisiert werden, die mit den Modulen bzw. Schnittstellen somit nicht notwendiger Weise in einem Eins-zu-Eins-Verhältnis stehen müssen.

In diesem Sinne kann jede Vorrichtung, jedes System, jedes Verfahren etc. welches alle Eigenschaften und Funktionen aufweist, welche einem bestimmen Modul oder einer bestimmten Schnittstelle zugeschrieben werden, so verstanden werden, dass sie bzw. es ein solches Modul bzw. Schnittstelle aufweist, darstellt, oder implementiert. Insbesondere kann es möglich sein, dass sämtliche Module und/oder Schnittstellen als Programmcode realisiert sind, welcher von einer Recheneinrichtung ausgeführt wird, z.B. von einem Server oder einer Cloud-Computing-Plattform.

Gemäß einigen bevorzugten Ausführungsformen, Varianten oder Verfeinerungen von Ausführungsformen umfasst die Zusatz-Drahtzuführeinrichtung eine Heizeinrichtung, mittels welcher der abschmelzende Zusatzdraht, AZD, vorwärmbar ist, beispielsweise durch eine Widerstandserwärmung. In dieser "Heißdrahtvariante" können das Anschmelzen und/oder das Abschmelzen erleichtert werden, was sich insbesondere für AZDs mit größeren Durchmessern anbietet, etwa mit Durchmessern von 1.2 mm oder mehr, oder 1.6 mm oder mehr, oder noch dicker. Die Drahtendenführung der Zusatz-Drahtzuführeinrichtung kann hierfür als ein Kontaktrohr ausgebildet sein, mittels welchem ein elektrisches Potenzial an den AZD anlegbar ist.

Gemäß einem weiteren Aspekt stellt die Erfindung ein Zusatzgerät für ein Metall-Schutzgas-Lichtbogenfügegerät für das Hand-Lichtbogenfügen bereit, umfassend:
eine Halterung, welche an einer Handhabungseinheit eines Metall-Schutzgas-Lichtbogenfügegeräts für das Hand-Lichtbogenfügen mit einer Drahtendenführung einer Haupt-Drahtzuführeinrichtung zum Fördern, entlang einer ersten Förderrichtung, einer lichtbogentragenden abschmelzenden Drahtelektrode, LBTAD, anbringbar ist,
und eine mit der Halterung verbundene Drahtendenführung einer Zusatz-Drahtzuführeinrichtung zum Fördern eines abschmelzenden Zusatzdrahts, AZD entlang einer zweiten Förderrichtung,
wobei die Halterung und die Drahtendenführung der Zusatz-Drahtzuführeinrichtung derart ausgebildet und zueinander angeordnet sind, dass, wenn die Halterung an der Handhabungseinheit des Metall-Schutzgas-Lichtbogenfügegeräts angebracht ist, die erste Förderrichtung und die zweite Förderrichtung zueinander in einem Winkel α zwischen 10° und 80° (also 10°≤α≤80°) stehen. Bevorzugt beträgt der Winkel α zwischen 25° und 70° (also 25°≤α≤70°), besonders bevorzugt zwischen 30° und 60° (also 30°≤α≤60°).

Das Zusatzgerät kann vorteilhaft nicht nur die Drahtendenführung der Zusatz-Drahtzuführeinrichtung, sondern die gesamte Zusatz-Drahtzuführeinrichtung umfassen, also beispielsweise auch eine zugehörige Drahtvorschubeinrichtung, welche dazu eingerichtet ist, den abschmelzenden Zusatzdraht, AZD, mit der gewünschten Drahtvorschubgeschwindigkeit zu fördern. Die Drahtendenführung der Zusatz-Drahtzuführeinrichtung ist mit der Halterung vorzugsweise starr (insbesondere fix oder verstellbar) verbunden. Die Halterung ist mit der Handhabungseinheit vorzugsweise starr (insbesondere fix oder verstellbar) verbindbar.

Das Zusatzgerät kann gemäß allen in Bezug auf das im Vorangehenden beschriebene Metall-Schutzgas-Lichtbogenfügegerät, MSLBFG, beschriebenen Ausführungsformen, Optionen, Varianten und Verfeinerungen angepasst werden. Beispielsweise kann die Halterung verstellbar sein, insbesondere innerhalb eines der genannten Winkelbereiche für den Winkel α.

Das Zusatzgerät kann eine Schnittstelle aufweisen, um mit einer Steuereinrichtung, einer Benutzerschnittstelle und/oder einem Anpassungsmodul verbindbar oder verbunden zu sein, damit eine entsprechende, insbesondere synchronisierte, Steuerung sowohl des Drahtvorschubs des abschmelzenden Zusatzdrahts, AZD, durch das Zusatzgerät als auch der lichtbogentragenden abschmelzenden Drahtelektrode, LBTAD, durchführbar ist.

Das Zusatzgerät ist bevorzugt dazu eingerichtet, derart an der Handhabungseinheit angebracht zu werden, dass der abschmelzende Zusatzdraht, AZD, bei dem Hand-Lichtbogenfügen der lichtbogentragenden abschmelzenden Drahtelektrode sowie dem Schmelzbad in Fügerichtung immer vorangeht.

Gemäß einem weiteren Aspekt stellt die Erfindung ein Verfahren zum händischen Metall-Schutzgas-Lichtbogenfügen bereit, umfassend zumindest die Schritte:
- Fördern einer lichtbogentragenden abschmelzenden Drahtelektrode, LBTAD, durch eine Haupt-Drahtzuführeinrichtung eines Metall-Schutzgas-Lichtbogenfügegeräts, wobei eine Drahtendenführung der Haupt-Drahtzuführeinrichtung in eine Handhabungseinheit des Metall-Schutzgas-Lichtbogenfügegeräts integriert ist;
- Erzeugen eines Lichtbogens an der lichtbogentragenden abschmelzenden Drahtelektrode, LBTAD;
- Fördern eines abschmelzenden Zusatzdrahts, AZD, durch eine Zusatz-Drahtzuführeinrichtung, welche mit der Handhabungseinheit verbunden ist (insbesondere starr, dabei fix oder verstellbar);
- händisches Führen der Handhabungseinheit (und damit auch der Drahtendenführung der Haupt-Drahtzuführeinrichtung und der Drahtendenführung der Zusatz-Drahtzuführeinrichtung) in einer Fügerichtung entlang einer zu erzeugenden Fügenaht an einem Werkstück, wobei der AZD derart an das Werkstück herangeführt wird, dass eine Kraftkomponente einer von dem abschmelzenden Zusatzdraht, AZD, auf das Werkstück ausgeübten Kraft eine Gegenkraft auf die Handhabungseinheit in die Fügerichtung, z.B. Schweißrichtung, bewirkt (oder: verursacht). Der abschmelzende Zusatzdraht, AZD, befindet sich dabei beispielsweise in einem erwärmten Zustand, wobei dieser noch genügend Festigkeit/Steifigkeit aufweist, um eine Gegenkraft zu erzeugen.

Die Handhabungseinheit wird händisch bevorzugt derart geführt, dass der abschmelzende Zusatzdraht, AZD, der lichtbogentragenden abschmelzenden Drahtelektrode sowie dem Schmelzbad in Fügerichtung immer vorangeht.

Gemäß einigen bevorzugten Ausführungsformen, Varianten oder Verfeinerungen von Ausführungsformen wird die lichtbogentragende abschmelzende Drahtelektrode, LBTAD, entlang einer ersten Förderrichtung gefördert, und der abschmelzende Zusatzdraht, AZD, entlang einer zweiten Förderrichtung gefördert, wobei die zweite Förderrichtung von der ersten Förderrichtung verschieden ist. Insbesondere sind die erste und die zweite Förderrichtung nicht parallel sondern beispielsweise windschief zueinander angeordnet, oder in einer Ebene angeordnet und stehen darin in einem Winkel von zwischen 5° und 95° zueinander (d.h. schneiden sich in diesem Winkel).

Somit ist die Gegenkraft für einen Nutzer, welcher das Verfahren durchführt (also z.B. ein Schweißer oder Löter), als intuitives haptisches Feedback spürbar. Auf diese Weise kann dem Nutzer somit eine Information, dass die Fügegeschwindigkeit zu erhöhen ist oder zu verringern ist, übermittelt werden, oder sogar eine genaue Fügegeschwindigkeit vorgegeben werden, mit der der Nutzer die Handhabungseinheit entlang der Fügenaht führt oder führen soll. Diese Soll-Fügegeschwindigkeit kann beispielsweise in Abhängigkeit von einem durch den Nutzer eingestellten Fügeprogramm automatisch bestimmt werden.

Haptisches Feedback hat gegenüber einem akustischen Feedback den besonderen Vorteil, dass der Nutzer dieses auch in einer lauten Umgebung leicht wahrnehmen kann, und gegenüber optischem Feedback den besonderen Vorteil, dass der Nutzer den Blick nicht von der Fügenaht nehmen muss. Darüber hinaus hat sich gezeigt, dass Nutzer schneller und intuitiver auf haptisches Feedback reagieren.

Beim dem Hand-Lichtbogenfügen wird die lichtbogentragende abschmelzende Drahtelektrode, LBTAD, vorzugsweise so geführt, dass sie (und/oder die erste Förderrichtung) zwischen 15° stechend bis 60° schleppend angeordnet ist (oder, anders ausgedrückt, zwischen 60° und 105° mit Bezug auf die Fügerichtung angeordnet ist). Ein minimaler Winkel ergibt sich hier dadurch, dass zwischen der ersten Förderrichtung und der Fügerichtung noch die zweite Förderrichtung angeordnet ist.

Bei der Zusatz-Drahtzuführeinrichtung kann es sich um eine Zusatz-Drahtzuführeinrichtung des Metall-Schutzgas-Lichtbogenfügegeräts, MSLBFG, handeln, oder um eine Zusatz-Drahtzuführeinrichtung, welche mittels des erfindungsgemäßen Zusatzgeräts an einem Metall-Schutzgas-Lichtbogenfügegerät, MSLBFG, angebracht ist.

Gemäß einigen bevorzugten Ausführungsformen, Varianten oder Verfeinerungen von Ausführungsformen liegt eine Fügegeschwindigkeit, mit welcher die Handhabungseinheit in die Fügerichtung geführt wird (und mit welcher somit auch die Drahtendenführung der Haupt-Drahtzuführeinrichtung und die Drahtendenführung der Zusatz-Drahtzuführeinrichtung in die Fügerichtung geführt werden) im Bereich von ±20% um eine mittlere Drahtvorschubgeschwindigkeit der Zusatz-Drahtzuführeinrichtung, insbesondere im Bereich von im Bereich von ±10%, besonders bevorzugt im Bereich von ±5%. Auf diese Weise kann dem Nutzer mittels der Zusatz-Drahtzuführeinrichtung eine haptische Vorgabe für eine optimierte Fügegeschwindigkeit bereitgestellt werden.

Gemäß einigen bevorzugten Ausführungsformen, Varianten oder Verfeinerungen von Ausführungsformen verbindet die zu erzeugende Fügenaht Kanten aus Stahl und/oder einer Legierung, insbesondere einer Stahllegierung, insbesondere im Stumpfstoß oder einer Kehlnaht, jeweils mit oder ohne Fase.

Vorzugsweise wird bei dem erfindungsgemäßen Verfahren die Handhabungseinheit so geführt, dass der abschmelzende Zusatzdraht, AZD, sich zwischen der Drahtendenführung der Zusatz-Drahtzuführeinrichtung und dem Werkstück durchbiegt, insbesondere um 10° oder mehr, insbesondere 20° oder mehr. Alternativ oder außerdem kann die Handhabungseinheit auch so geführt werden, dass sich der AZD mit einem Radius R verbiegt, welcher insbesondere zwischen 50 mm und 350 mm liegt. Auf diese Weise kann eine noch stärkere Kraftkomponente der Gegenkraft in Richtung der Fügerichtung vorliegen, sodass sich beispielsweise das haptische Feedback an den Nutzer verstärkt. Auf diese Weise kann eine Führung des Nutzers in Richtung der Fügerichtung noch verstärkt werden.

Gemäß einigen bevorzugten Ausführungsformen, Varianten oder Verfeinerungen von Ausführungsformen wird das Werkstück während des Hand-Lichtbogenfügens fixiert, insbesondere falls es eine so geringe Masse aufweist, dass es ansonsten durch die auf das Werkstück ausgeübte Kraft weggeschoben würde, was das Ergebnis des Hand-Lichtbogenfügens verschlechtern könnte.

Bei allen Ausführungsformen aller Aspekte der vorliegenden Erfindung können die Drahtdurchmesser der lichtbogentragenden abschmelzenden Drahtelektrode, LBTAD, und des abschmelzenden Zusatzdrahts, AZD, gleich oder unterschiedlich sein. Auch die jeweiligen Materialien, insbesondere etwaige Zusatzwerkstoffe, können jeweils unterschiedlich gewählt werden.

Weitere bevorzugte Ausführungsformen, Varianten und Weiterbildungen von Ausführungsformen ergeben sich aus den Unteransprüchen sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen:
- Fig. 1: eine schematische Darstellung eines Metall-Schutzgas-Lichtbogenfügegeräts gemäß einer Ausführungsform der vorliegenden Erfindung, sowie eines Zusatzgeräts gemäß einer weiteren Ausführungsform der vorliegenden Erfindung; und
- Fig. 2: ein schematisches Flussdiagramm zum Erläutern eines Verfahrens gemäß noch einer weiteren Ausführungsform der vorliegenden Erfindung.
- Fig. 3 und Fig. 4: vorteilhafte geometrische Zusammenhänge bei dem Metall-Schutzgas-Lichtbogenfügegerät oder Zusatzgerät gemäß Fig. 1 und/oder bei dem Verfahren gemäß Fig. 2 ; und
- Fig. 5A bis Fig. 7B: verschiedene Varianten gemäß denen die Haupt- und Zusatz-Drahtzuführeinrichtung erfindungsgemäß gesteuert werden können.

In sämtlichen Figuren sind gleiche bzw. funktionsgleiche Elemente und Vorrichtungen - sofern nichts anderes angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

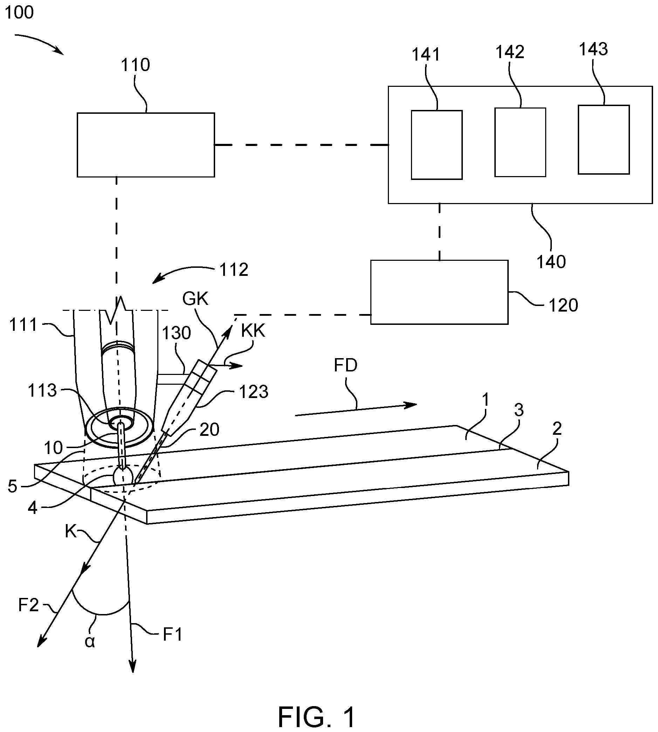

Fig. 1 zeigt eine schematische Darstellung eines Metall-Schutzgas-Lichtbogenfügegeräts, MSLBFG, gemäß einer Ausführungsform der vorliegenden Erfindung. Als ein konkretes Beispiel wird hier und im Folgenden ein Metall-Schutzgas-Schweißgerät, MSSG 100, zur Erklärung der Funktionen und möglicher Varianten der Erfindung verwendet. Es versteht sich jedoch, dass alles Beschriebene und Implizierte ebenso auch auf andere Metall-Schutzgas-Lichtbogenfügegeräte anwendbar ist, beispielsweise auf Metall-Schutzgas-Lichtbogen-Lötgeräte (oder, kurz: Metall-Schutzgas-Lötgeräte). Dementsprechend können alle auf Schweißen bezogenen Begriffe hierin (z.B.: Schweißrichtung, Schweißprogramm, Schweißbrenner, Schweißer, etc.) auch entsprechend auf Lichtbogen-Lötgeräte/Lichtbogen-Lötverfahren oder andere Lichtbogen-Fügegeräte/Lichtbogen-Fügeverfahren gelesen werden.

Das beispielhaft beschriebene Metall-Schutzgas-Schweißgerät, MSSG 100, ist insbesondere zum Metall-Schutzgas-Handschweißen eingerichtet. In Fig. 1 sind nur die für die vorliegende Erfindung relevantesten Elemente des Metall-Schutzgas-Schweißgeräts, MSSG 100, dargestellt; es versteht sich, dass dieses weitere für Metall-Schutzgas-Schweißgeräte typische Elemente umfassen kann, wie etwa eine Schweißstromquelle, ein Schlauchpaket, eine oder mehrere Drahtspindeln, einen Schutzgasspeicher, und/oder dergleichen mehr.

Das erfindungsgemäße Metall-Schutzgas-Schweißgerät, MSSG 100, umfasst eine Haupt-Drahtzuführeinrichtung 110 zum Fördern einer lichtbogentragenden abschmelzenden Drahtelektrode, LBTAD 10, entlang einer ersten Förderrichtung F1. Die Haupt-Drahtzuführeinrichtung 110 ist in Fig. 1 nur schematisch dargestellt. Ein Teil der Haupt-Drahtzuführeinrichtung, nämlich deren Drahtendenführung 113, ist als das Kontaktrohr eines (nur teilweise dargestellten) Schweißbrenners 112 ausgebildet und in diesen integriert. Dabei ist die Drahtendenführung 113 der Haupt-Drahtzuführeinrichtung 110 vorteilhaft starr, insbesondere fix, in dem Schweißbrenner 112 angeordnet.

Der Schweißbrenner 112 wird von einem Schweißer händisch geführt und stellt somit die Handhabungseinheit des Metall-Schutzgas-Schweißgeräts, MSSG 100 dar. Der Schweißbrenner 112 ist insbesondere dazu eingerichtet, so geführt zu werden, dass der abschmelzende Zusatzdraht, AZD 20, der lichtbogentragenden abschmelzenden Drahtelektrode, LBTAD 10, sowie dem Schmelzbad in Fügerichtung FD immer vorangeht.

Der Schweißbrenner 112 ist dazu eingerichtet, an der lichtbogentragenden abschmelzenden Drahtelektrode, LBTAD 10, einen Lichtbogen 4 zu erzeugen, um ein Fügeprogramm (hier: Schweißprogramm) durchzuführen. Die hierfür verwendete Leistungselektronik ist typischerweise ganz oder teilweise in der Schweißstromquelle des Metall-Schutzgas-Schweißgeräts, MSSG 100, angeordnet. Auch eine Drahtvorschubeinrichtung der Haupt-Drahtzuführeinrichtung 110 (bei diesem Ausführungsbeispiel als externe Einheit ausgeführt) kann an oder in der Schweißstromquelle des Metall-Schutzgas-Schweißgeräts, MSSG 100, angeordnet sein.

In Fig. 1 ist das Werkstück 1, 2 dargestellt als zwei Werkstückteile 1, 2, welche in einem Stumpfstoß 3 zu verschweißen sind; es versteht sich, dass auch eine Vielzahl anderer Schweißaufgaben mit dem erfindungsgemäßen Metall-Schutzgas-Schweißgerät, MSSG 100, durchführbar sind, beispielsweise Stumpfstöße mit und ohne Fase, Kehlnähte, und dergleichen mehr.

Das Metall-Schutzgas-Schweißgerät, MSSG 100, umfasst außerdem eine Gasführung (nicht dargestellt) mit einer Schutzgasdüse 111, welche typischerweise ebenfalls an dem Schweißbrenner 112 angeordnet ist, und welche dazu eingerichtet ist, ein Schutzgas 5 auszuströmen, welches die chemischen Vorgänge während des Schweißens gegenüber äußeren Einwirkungen, insbesondere von Sauerstoff aus der Umgebung, schützt. Das Metall-Schutzgas-Schweißgerät, MSSG 100, kann ein Metall-Inertgas-Schweißgerät, also ein MIG-Schweißgerät, oder ein Metall-Aktivgas-Schweißgerät, also ein MAG-Schweißgerät, sein.

Das Metall-Schutzgas-Schweißgerät, MSSG 100, umfasst außerdem eine mit dem Schweißbrenner 112 verbundene Drahtendenführung 123 einer Zusatz-Drahtzuführeinrichtung 120 zum Fördern eines abschmelzenden Zusatzdrahts, AZD 20, entlang einer von der ersten Förderrichtung F1 verschiedenen zweiten Förderrichtung F2. Auch die Zusatz-Drahtzuführeinrichtung 120, welche ebenfalls Teil des Metall-Schutzgas-Schweißgeräts, MSSG 100, ist, ist in Fig. 1 nur schematisch dargestellt. Obwohl die jeweiligen Drahtendenführungen 113, 123 aus Gründen der Übersichtlichkeit separat dargestellt sind, versteht es sich, dass diese jeweils Teil der Haupt-Drahtzuführeinrichtung 110 bzw. der Zusatz-Drahtzuführeinrichtung 120 sind.

Die Drahtendenführung 123 der Zusatz-Drahtzuführeinrichtung 120 ist über eine Halterung 130 mit dem Schweißbrenner 112 verbunden. Die Halterung 130 kann entweder fix ausgeführt sein, sodass die erste Förderrichtung F1 und die zweite Förderrichtung F2 in einem festen Winkel α zueinander stehen, oder verstellbar ausgeführt sein, sodass der Winkel α einstellbar ist. In beiden Fällen ist die Verbindung jedoch, ggfs. nach Einstellung und Feststellung (d.h. temporärer, wieder lösbarer Fixierung), starr, sodass ein Kraftübertrag von der Zusatz-Drahtzuführeinrichtung 120 auf den Schweißbrenner 112 im Wesentlichen vollständig erfolgt.

Der starre Winkel α kann zwischen 10° und 80° (also 10°≤α≤80°), bevorzugt zwischen 25° und 70° (also 25°≤α≤70°), besonders bevorzugt zwischen 30 und 60° (also 30°≤α≤60°) betragen. Bei der verstellbaren Halterung 130 kann der Winkel α innerhalb eines dieser Bereiche einstellbar sein.

Das Verstellen der verstellbaren Halterung 130 kann entweder manuell erfolgen, wobei an der Halterung 130 eine Winkelskala angebracht sein kann, damit die Einstellung des Winkels α präzise und akkurat erfolgen kann. Mittels einer Rasteinrichtung kann die Halterung zwischen einem gelösten Zustand, in welchem der Winkel α einstellbar ist, und einem verrasteten (oder: temporär/lösbar festgestellten) Zustand, in welchem der Winkel α fest ist, umgestellt werden.

Das Verstellen der verstellbaren Halterung 130, also das Einstellen des Winkels α, kann auch motorisiert erfolgen. Beispielsweise kann die Halterung 130 einen Elektromotor aufweisen, mittels welchem der Winkel α einstellbar ist. Der Elektromotor kann, wie auch andere Elemente des Metall-Schutzgas-Schweißgeräts, MSSG 100, beispielsweise durch eine Steuereinrichtung 140 des Metall-Schutzgas-Schweißgeräts, MSSG 100, gesteuert werden, welche im Folgenden noch näher erläutert werden wird. Auf diese Weise kann eine Anpassung des Winkels α beispielsweise automatisch erfolgen, etwa in Abhängigkeit eines ausgewählten Schweißprogramms und/oder als Reaktion auf mindestens einen veränderten Parameter der Haupt-Drahtzuführeinrichtung 110 oder der Zusatz-Drahtzuführeinrichtung 120.

Die Zusatz-Drahtzuführeinrichtung 120, insbesondere deren Drahtendenführung 123, ist derart angeordnet und eingerichtet, dass der abschmelzende Zusatzdraht, AZD 20, bei dem Handschweißen in solcher Weise auf das zu schweißende Werkstück 1, 2 auftrifft, dass der abschmelzende Zusatzdraht, AZD 20, während er von dem Lichtbogen 4 der LBTAD 10 angeschmolzen wird, auf das Werkstück 1, 2 eine Kraft K ausübt und somit (nach dem 3. Newton'schen Gesetz) eine Gegenkraft GK auf die Drahtendenführung 123 der Zusatz-Drahtzuführeinrichtung 120 erzeugt.

Dabei kann der abschmelzende Zusatzdraht, AZD 20, an dem Werkstück 1, 2 in den an der lichtbogentragenden abschmelzenden Drahtelektrode, LBTAD 10, ausgebildeten Lichtbogen 4 eintreten (beispielsweise in einen Randbereich) und dort angeschmolzen werden, oder bereits außerhalb des Lichtbogens 4 von dessen Wärmestrahlung und/oder an dem Werkstück und/oder einem Schmelzbad an dem Werkstück angeschmolzen werden. Ein endgültiges Abschmelzen des zuvor angeschmolzenen Abschnitts des AZD 20 erfolgt vorteilhaft innerhalb des Lichtbogens 4, beispielsweise innerhalb dessen Zentrums.

Die ausgeübte Kraft K wirkt im Wesentlichen, oder vollständig, entlang der zweiten Förderrichtung F2, und die entsprechende Gegenkraft GK somit entgegen der zweiten Förderrichtung F2. Wie in Fig. 1 gezeigt, ist die Anordnung weiterhin derart, dass die Gegenkraft GK eine Kraftkomponente KK entlang der Fügerichtung FD aufweist. Über die Halterung 130 liegt diese Kraftkomponente KK auch an der Handhabungseinheit, d.h. dem Schweißbrenner 112, an. Diese Kraftkomponente KK stellt für den Nutzer des Metall-Schutzgas-Schweißgeräts, MSSG 100, ein haptisches Feedback dar, insbesondere um daran die dem Nutzer vorgegebene Fügegeschwindigkeit entlang der Fügerichtung FD einstellen zu können. Bei dem konkreten Beispiel von Fig. 1 wird somit einem Schweißer ein haptisches Feedback über eine einzuhaltende Schweißgeschwindigkeit entlang der Schweißrichtung gegeben.

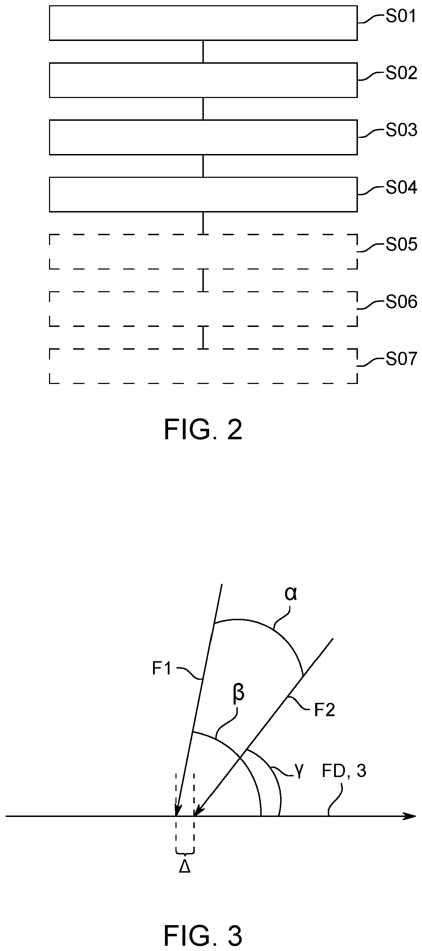

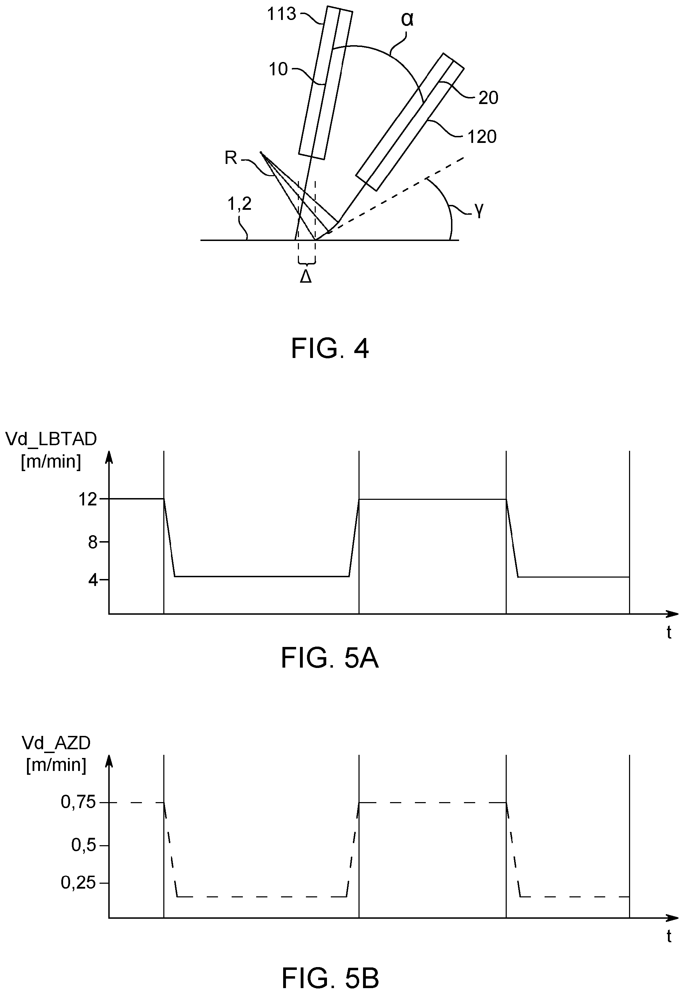

Die Drahtendenführung 113 der Haupt-Drahtzuführeinrichtung 110 und die Drahtendenführung 123 der Zusatz-Drahtzuführeinrichtung 120 sind vorzugsweise zueinander derart angeordnet, dass die lichtbogentragende abschmelzende Drahtelektrode, LBTAD 10, und der abschmelzende Zusatzdraht, AZD 20, während des Hand-Lichtbogenfügens (hier: Handschweißens) in einem Abstand von mindestens 1 mm, bevorzugt mindestens 4 mm, besonders bevorzugt mindestens 6 mm, voneinander mit dem Werkstück in Kontakt kommen (siehe auch Fig. 3 und Fig. 4).

Das Metall-Schutzgas-Schweißgerät, MSSG 100, kann, wie bereits erwähnt, eine Steuereinrichtung 140 aufweisen, mittels welcher sowohl die Haupt-Drahtzuführeinrichtung 110 als auch die Zusatz-Drahtzuführeinrichtung 120, insbesondere miteinander koordiniert und bevorzugt synchronisiert, steuerbar sind.

Wie im Vorangehenden bereits erläutert wurde, können die erste und die zweite mittlere Drahtvorschubgeschwindigkeit gleich oder unterschiedlich sein, und sich insbesondere zeitweise oder stets voneinander unterscheiden. Die erste und die zweite mittlere Drahtvorschubgeschwindigkeiten können jeweils einzeln einstellbar sein, etwa mittels einer Benutzerschnittstelle 141, welche drahtgebunden oder drahtlos ausgeführt sein kann, und welche in den Schweißbrenner 112 integriert oder von diesem getrennt ausgebildet sein kann. Die Benutzerschnittstelle 141 kann in die Steuereinrichtung 140 integriert sein oder davon unabhängig ausgebildet sein.

Es kann auch vorgesehen sein, dass ein festes Verhältnis zwischen der ersten und der zweiten mittleren Drahtvorschubgeschwindigkeit vorgegeben ist, und mittels der Benutzerschnittstelle 141 beide zusammen unter Beibehaltung des festen Verhältnisses mit einem einstellbaren Faktor skalierbar sind.

Die erste mittlere Drahtvorschubgeschwindigkeit kann zwischen dem 1,5-fachen und dem 40-fachen der zweiten mittleren Drahtvorschubgeschwindigkeit betragen, insbesondere zwischen dem 10-fachen und dem 35-fachen der zweiten mittleren Drahtvorschubgeschwindigkeit betragen. Falls die erste und die zweite mittlere Drahtvorschubgeschwindigkeit getrennt voneinander einstellbar oder eingebbar sind, kann vorgesehen sein, dass der Faktor auf einen Wert in einem der genannten Bereiche beschränkt ist.

Wie im Vorangehenden ebenfalls bereits erläutert wurde, können die erste und/oder die zweite mittlere Drahtvorschubgeschwindigkeit nicht-konstant sein, wobei insbesondere die erste und/oder die zweite mittlere Drahtvorschubgeschwindigkeit zumindest abschnittsweise periodisch beschleunigt und verzögert wird, beispielsweise zum Durchführen eines CMT-Verfahrens oder eines Mix-CMT-Verfahrens.

Die Benutzerschnittstelle 141 kann dazu eingerichtet sein, dass mittels ihr mindestens ein Parameter einer mit dem Metall-Schutzgas-Schweißgerät, MSSG 100, durchzuführenden Schweißaufgabe, insbesondere eine gewünschte Fügegeschwindigkeit, ein Öffnungswinkel einer V-Naht, ein α-Maß, ein gewünschtes Volumen der Fügenaht (hier: Schweißnaht) pro Längeneinheit, eine Eigenschaft der LBTAD 10 und/oder des AZD 20 (z.B. ein Drahtdurchmesser, ein Drahtmaterial etc.), oder eine Eigenschaft des Werkstücks (z.B. eine Dicke oder ein Material) einstellbar oder eingebbar ist.

Das Metall-Schutzgas-Schweißgerät, MSSG 100, kann außerdem ein Anpassungsmodul 142 aufweisen, welches dazu eingerichtet ist, die Haupt-Drahtzuführeinrichtung 110 und/oder die Zusatz-Drahtzuführeinrichtung 120 in Abhängigkeit von dem eingestellten mindestens einen Parameter automatisch zu steuern, insbesondere eine jeweilige (d.h., die erste und/oder die zweite) mittlere Drahtvorschubgeschwindigkeit automatisch einzustellen. Auch das Anpassungsmodul 142 kann in die Steuereinrichtung 140 integriert sein, oder auch separat davon ausgebildet sein.

Beispielsweise kann beim Hand-Lichtbogenschweißen einer Kehlnaht mit einem eingegebenen a-Maß von 5 mm und einem eingegebenen Drahtdurchmesser von 1,2 mm eines abschmelzenden Zusatzdrahts, AZD 20, aus einem Stahl bei einer in die Benutzerschnittstelle 141 eingegebenen gewünschten Schweißgeschwindigkeit von 40 cm/min eine mittlere zweite Drahtvorschubgeschwindigkeit automatisch auf 11,6 m/min eingestellt sein.

Wird nun eine höhere gewünschte Schweißgeschwindigkeit von z.B. 75 cm/min in die Benutzerschnittstelle 141 eingegeben, wird die mittlere zweite Drahtvorschubgeschwindigkeit automatisch auf beispielsweise 22 m/min erhöht. Die entsprechende Anpassung der mittleren zweiten Drahtvorschubgeschwindigkeit kann insbesondere proportional erfolgen.

Als ein weiteres Beispiel kann beim Hand-Lichtbogenschweißen einer Stumpfnaht mit V-Anarbeitung (V-Naht) und mit einem Steg bei einer eingegebenen Blechdicke von 6 mm und einem eingegebenen Drahtdurchmesser von 1,2 mm eines abschmelzenden Zusatzdrahts, AZD 20, aus einem Stahl, bei einem eingegebenen Öffnungswinkel von 60° und einer eingegebenen gewünschten Schweißgeschwindigkeit von 40 cm/min die mittlere zweite Drahtvorschubgeschwindigkeit des AZD 20 automatisch auf 13,2 m/min eingestellt sein.

Wird die gewünschte Schweißgeschwindigkeit dann beispielsweise auf 60 cm/min erhöht, kann die mittlere zweite

Drahtvorschubgeschwindigkeit des AZD 20 automatisch auf 19,8 m/min erhöht werden.

Würde stattdessen ein Öffnungswinkel von 45° eingegeben, könnte bei eingegebener gewünschter Schweißgeschwindigkeit von 60 cm/min die mittlere zweite Drahtvorschubgeschwindigkeit des AZD 20 hingegen automatisch auf nur 14,6 m/min erhöht werden.

Die Steuereinrichtung 140 kann auch ein Lichtbogen-Detektionsmodul 143 umfassen, mittels welchem feststellbar ist, ob aktuell ein Lichtbogen 4 an der lichtbogentragenden abschmelzenden Drahtelektrode, LBTAD 10, brennt. Die Steuereinrichtung 140 kann außerdem dazu eingerichtet sein, die Zusatz-Drahtzuführeinrichtung 120 zu steuern, den abschmelzenden Zusatzdraht, AZD 20, höchstens dann zu fördern, wenn gemäß dem Lichtbogen-Detektionsmodul 143 aktuell ein Lichtbogen 4 brennt. Mit Erlöschen des Lichtbogens 4 endet somit das Fördern des abschmelzenden Zusatzdrahts, AZD 20, und somit verschwindet automatisch auch die Gegenkraft GK, was für den Nutzer (hier: Schweißer) ein haptisches Feedback (oder: Signal) darstellt, die Fügegeschwindigkeit zu senken oder beispielsweise auf null zu reduzieren. Darüber hinaus kann das danach folgende Wiederzünden des erloschenen Lichtbogens hierdurch erleichtert werden.

Die Steuereinrichtung 140 kann auch dazu eingerichtet sein, eine Blaswirkung an der lichtbogentragenden abschmelzenden Drahtelektrode, LBTAD 10, festzustellen, und daraufhin automatisch die Zusatz-Drahtzuführeinrichtung 120 steuern, den abschmelzenden Zusatzdraht, AZD 20, derart zu fördern, dass die Blaswirkung, oder deren Einfluss, reduziert wird.

Fig. 1 dient außerdem zum Erläutern eines Zusatzgeräts für ein Metall-Schutzgas-Lichtbogenfügegerät für das Hand-Lichtbogenfügen, insbesondere für ein Metall-Schutzgas-Schweißgerät für das Handschweißen. Ein solches Zusatzgerät umfasst zumindest die Drahtendenführung 123 der Zusatz-Drahtzuführeinrichtung 120 (oder die gesamte Zusatz-Drahtzuführeinrichtung 120) sowie die Halterung 130.

Mittels der Halterung 130 ist das Zusatzgerät an eine Handhabungseinheit 112 eines Metall-Schutzgas-Lichtbogenfügegeräts anbringbar, welches eine Drahtendenführung einer Haupt-Drahtzuführeinrichtung umfasst. Dabei sind die Halterung 130 und die Drahtendenführung 123 der Zusatz-Drahtzuführeinrichtung 120 derart ausgebildet und zueinander angeordnet, dass, wenn die Halterung 130 an der Handhabungseinheit 112 angebracht ist, die erste Förderrichtung F1 und die zweite Förderrichtung F2 zueinander in einem Winkel α zwischen 10° und 80° stehen.

Dabei kann die Halterung 130, wie im Vorangehenden bereits beschrieben wurde, fix oder verstellbar ausgebildet sein, sodass auch der Winkel α innerhalb eines der im Vorangehenden genannten Winkelbereiche festgelegt oder einstellbar sein kann.

Das Zusatzgerät kann eine drahtgebundene oder drahtlose Schnittstelle aufweisen, mit welcher es an eine Steuereinrichtung 140 des Metall-Schutzgas-Schweißgeräts anschließbar ist, beispielsweise damit mittels der Steuereinrichtung 140 die Haupt-Drahtzuführeinrichtung 110 und die Zusatz-Drahtzuführeinrichtung 120, koordiniert und insbesondere synchronisiert, steuerbar sind, wie im Vorangehenden bereits ausführlich mit Bezug auf das erfindungsgemäße Metall-Schutzgas-Lichtbogenfügegerät, insbesondere das Metall-Schutzgas-Schweißgerät, MSSG 100, erläutert wurde.

Fig. 2 zeigt ein schematisches Flussdiagramm zur Erläuterung eines Verfahrens gemäß einer weiteren Ausführungsform der vorliegenden Erfindung, nämlich eines Verfahrens zum händischen Metall-Schutzgas-Lichtbogenfügen, insbesondere MIG-Schweißen oder MAG-Schweißen, aber auch MIG-Löten oder MAG-Löten. Das Verfahren ist insbesondere mittels des erfindungsgemäßen Metall-Schutzgas-Lichtbogenfügegeräts, MSLFG, bevorzugt mittels des Metall-Schutzgas-Schweißgeräts, MSSG 100, oder mittels eines mit dem erfindungsgemäßen Zusatzgerät ausgestatteten herkömmlichen MIG- oder MAG-Lichtbogenfügegeräts durchführbar. Dementsprechend ist das Verfahren gemäß allen in Bezug auf das erfindungsgemäße Metall-Schutzgas-Lichtbogenfügegerät, insbesondere das Metall-Schutzgas-Schweißgerät, MSSG 100, oder das erfindungsgemäße Zusatzgerät beschriebenen Ausführungsformen, Varianten, Optionen, oder Verfeinerungen anpassbar und umgekehrt.

In einem Schritt S01 wird eine lichtbogentragende abschmelzende Drahtelektrode, LBTAD 10, durch eine Haupt-Drahtzuführeinrichtung 110 eines Metall-Schutzgas-Lichtbogenfügegeräts, MSLBFG, (z.B. eines Metall-Schutzgas-Schweißgeräts, MSSG 100) entlang einer ersten Förderrichtung F1 gefördert. Dabei ist eine Drahtendenführung 113 der Haupt-Drahtzuführeinrichtung 110 in eine Handhabungseinheit des Metall-Schutzgas-Lichtbogenfügegeräts, MSLBFG, integriert.

In einem Schritt S02 wird an der lichtbogentragenden abschmelzenden Drahtelektrode, LBTAD 10, ein Lichtbogen 4 erzeugt. Wie im Vorangehenden erläutert wurde, kann dies durch ein Fügeprogramm, insbesondere ein Zündverfahren innerhalb des Fügeprogramms, erfolgen, welches beispielsweise durch eine Schweißstromquelle des Metall-Schutzgas-Schweißgeräts, MSSG 100, an dem Schweißbrenner 112 durchgeführt wird. Alternativ kann dies auch durch ein Lötprogramm, insbesondere ein Zündverfahren innerhalb des Lötprogramms, erfolgen, welches durch eine Stromquelle eines Metall-Schutzgas-Handlötgeräts durchgeführt wird.

In einem Schritt S03 wird ein abschmelzender Zusatzdraht, AZD 20, durch eine Zusatz-Drahtzuführeinrichtung 120, welche mit der Haupt-Drahtzuführeinrichtung 110 (insbesondere starr, dabei fix oder verstellbar) verbunden ist, entlang einer zweiten Förderrichtung F2 gefördert. Die Zusatz-Drahtzuführeinrichtung 120 weist eine Drahtendenführung 123 auf, welche mit der Handhabungseinheit 112 (insbesondere starr, dabei fix oder verstellbar) verbunden ist. Bei dieser Zusatz-Drahtzuführeinrichtung 120 kann es sich um eine Zusatz-Drahtzuführeinrichtung 120 des Metall-Schutzgas-Lichtbogenfügegeräts (z.B. des Metall-Schutzgas-Schweißgeräts, MSSG 100) handeln, oder um eine Zusatz-Drahtzuführeinrichtung 120 eines erfindungsgemäßen Zusatzgeräts, welches an einem Metall-Schutzgas-Lichtbogenfügegerät, MSLBFG, angebracht ist.

Die zweite Förderrichtung F2 ist vorteilhaft verschieden von der ersten Förderrichtung F1, insbesondere nicht-parallel zu dieser.

In einem Schritt S04 erfolgt (durch einen Nutzer, also etwa einen Schweißer oder Löter) ein händisches Führen der Handhabungseinheit 112 (und somit auch der Drahtendenführung 113 der Haupt-Drahtzuführeinrichtung 110 und der Drahtendenführung 123 der Zusatz-Drahtzuführeinrichtung 120) in einer Fügerichtung FD entlang einer zu erzeugenden Fügenaht (z.B. Schweißnaht oder Lötnaht) an einem Werkstück 1, 2. Dabei wird der abschmelzende Zusatzdraht, AZD 20 derart an das Werkstück 1, 2 herangeführt, dass eine Kraftkomponente KK einer von dem abschmelzenden Zusatzdraht, AZD 20, auf das Werkstück 1, 2 ausgeübten Kraft K eine Gegenkraft GK auf die Handhabungseinheit 112 (beispielsweise einen Schweißbrenner 112) in die Fügerichtung FD bewirkt.

Die Handhabungseinheit 112 für das Hand-Lichtbogenfügen insbesondere derart geführt, dass der abschmelzende Zusatzdraht, AZD 20, der lichtbogentragenden abschmelzenden Drahtelektrode, LBTAD 10, sowie dem Schmelzbad in Fügerichtung FD immer vorangeht.

Bevorzugt wird der abschmelzende Zusatzdraht, AZD 20, durch eine auf den Lichtbogen 4 zurückgehende Wärmequelle (etwa den Lichtbogen selbst, dessen Wärmestrahlung, oder das von ihm erwärmte Werkstück oder Schmelzbad) jeweils (insbesondere fortlaufend) angeschmolzen, während er die Gegenkraft GK ausübt, und besonders bevorzugt jeweils danach vorteilhaft (insbesondere fortlaufend) vollständig abgeschmolzen, sodass das Material des abschmelzenden Zusatzdrahts, AZD 20, schlussendlich in oder an der Fügenaht angeordnet ist.

Wie im Vorangehenden bereits erläutert wurde, kann die Gegenkraft GK insbesondere durch einen jeweils aktuell angeschmolzenen, jedoch noch nicht abgeschmolzenen, Abschnitt des AZD 20 ausgeübt werden. Während die Handhabungseinheit 112 weiter entlang der Fügerichtung FD geführt S04 wird, tritt dann vorteilhaft der jeweils angeschmolzene, auf dem Werkstück 1, 2 abgelegte (oder: aufgetragene) Abschnitt des AZD 20 (tiefer oder erstmalig) in den Lichtbogen 4 ein und wird von diesem auf dem Werkstück 1, 2 vollends abgeschmolzen.

Bei Metall-Schutzgas-Schweißverfahren bzw. Metall-Schutzgas-Schweißgeräten, MSSG 100, erfolgt dies bevorzugt während durch den erzeugten Lichtbogen 4 die lichtbogentragende abschmelzende Drahtelektrode, LBTAD 10, sowie Teile des Werkstücks 1, 2 aufgeschmolzen werden. Bei Metall-Schutzgas-Lötverfahren bzw. Metall-Schutzgas-Lötgeräten erfolgt dies bevorzugt während durch den erzeugten Lichtbogen 4 die lichtbogentragende abschmelzende Drahtelektrode, LBTAD 10 aufgeschmolzen wird.

Die Fügegeschwindigkeit, die für das händische Führen S04 gewählt wird und mit welcher die Haupt-Drahtzuführeinrichtung 110 und die mit ihr über die Halterung 130 gekoppelte Zusatz-Drahtzuführeinrichtung 120 in die Fügerichtung FD geführt werden, liegt vorzugsweise im Bereich von ±20% um eine mittlere Drahtvorschubgeschwindigkeit der Zusatz-Drahtzuführeinrichtung, insbesondere im Bereich von ±15%, bevorzugt im Bereich von ±10%, besonders bevorzugt im Bereich von ±5%.

Das erfindungsgemäße Verfahren ist für eine Vielzahl von Fügeaufgaben geeignet, beispielsweise für zu erzeugende Fügenahten, welche Kanten aus Stahl und/oder einer Legierung, beispielsweise einer Stahllegierung, verbinden, insbesondere im Stumpfstoß 3 mit oder ohne Fase.

Das Verfahren kann optionale weitere Verfahrensschritte umfassen, wie sie im Vorangehenden bereits mit Bezug auf das erfindungsgemäße Metall-Schutzgas-Lichtbogenfügegerät, insbesondere das Metall-Schutzgas-Schweißgerät, MSSG 100, beschrieben wurden.

Beispielsweise kann in einem optionalen Schritt S05 mindestens ein Parameter der durchzuführenden Fügeaufgabe, beispielsweise eine Nahtdicke, eingestellt werden, etwa wie dies mit Bezug auf die Benutzerschnittstelle 141 im Vorangehenden erläutert wurde.

Daraufhin kann in einem Schritt S06 die Haupt-Drahtzuführeinrichtung 110 und/oder die Zusatz-Drahtzuführeinrichtung 120 in Abhängigkeit von dem eingestellten und/oder eingegebenen Parameter mindestens ein Parameter automatisch gesteuert werden. Insbesondere kann in Abhängigkeit von dem eingestellten Parameter eine jeweilige mittlere Drahtvorschubgeschwindigkeit (d.h. die erste mittlere Drahtvorschubgeschwindigkeit der Haupt-Drahtzuführeinrichtung 110 und/oder die zweite mittlere Drahtvorschubgeschwindigkeit der Zusatz-Drahtzuführeinrichtung 120) automatisch eingestellt werden, etwa wie dies im Vorangehenden mit Bezug auf das Anpassungsmodul 142 beschrieben wurde.

In einem optionalen Schritt S07 kann festgestellt werden, ob aktuell ein Lichtbogen 4 an der lichtbogentragende abschmelzende Drahtelektrode, LBTAD 10, brennt. Das Verfahren kann so eingestellt sein, dass der abschmelzende Zusatzdraht, AZD 20, (und optional auch die lichtbogentragende abschmelzende Drahtelektrode, LBTAD 10) höchstens dann gefördert S03 (bzw. S01) wird, wenn festgestellt wird, dass aktuell der Lichtbogen 4 brennt.

Außerdem kann im Vorfeld, oder als ein optionaler Schritt, das Werkstück 1, 2 fixiert werden, etwa an einer Werkbank. Werkstücke 1, 2 mit großer Masse sind gut dazu geeignet, die gewünschte Gegenkraft GK auf die Drahtendenführung 123 des Zusatz-Drahtzuführeinrichtung 120 in stabiler Weise auszuüben. Werkstücke 1, 2 mit geringer Masse und/oder geringer Haftreibung auf ihrer Unterlage können unter Umständen jedoch durch die auf das Werkstück 1, 2 ausgeübte Kraft K weggeschoben werden, was die Qualität der Fügenaht verschlechtern kann. In diesen Fällen ist die Fixierung des Werkstücks 1, 2 als zusätzlicher Schritt vorteilhaft.

Fig. 3 und Fig. 4 erläutern schematisch vorteilhafte geometrische Zusammenhänge bei dem erfindungsgemäßen Metall-Schutzgas-Lichtbogenfügegerät, MSLBFG, insbesondere dem Metall-Schutzgas-Schweißgerät, MSSG 100, sowie bei dem erfindungsgemäßen Verfahren nach Fig. 2.

Die Fügerichtung FD (etwa eine Schweißrichtung) verläuft bei Fig. 3, wie es typisch ist, entlang einer Fügenaht, hier beispielsweise eines Stumpfstoßes 3. Die Drahtendenführung 113 der Haupt-Drahtzuführeinrichtung 110 und die Drahtendenführung 123 der Zusatz-Drahtzuführeinrichtung 120 sind derart zueinander angeordnet, dass die erste Förderrichtung F1 und die zweite Förderrichtung F2 in einem Winkel α zwischen 10° und 80°, insbesondere in einem Winkel zwischen 25° und 70°, besonders bevorzugt in einem Winkel zwischen 30 und 60° stehen.

Das Hand-Lichtbogenfügen (z.B. Handschweißen) wird (insbesondere bei dem erfindungsgemäßen Verfahren gemäß Fig. 2) bevorzugt derart durchgeführt, dass die erste Förderrichtung F1 zu der Fügerichtung FD (und/oder zu dem Werkstück 1, 2 und/oder der Fügenaht) in einem Winkel β steht, wobei insbesondere 60°≤β≤105° gilt. Dieser Winkel β wird somit beim Hand-Lichtbogenfügen erfindungsgemäß bevorzugt innerhalb dieses Winkelbereichs eingestellt, indem die Handhabungseinheit entsprechend zum Werkstück 1, 2 gehalten und geführt wird.

Bei β>90° spricht man von einer stechenden Führung, bei β<90° von einer schleppenden Führung. In Fig. 3 beispielhaft dargestellt ist eine schleppende Führung mit β=80° und α=30°. Somit trifft der abschmelzende Zusatzdraht, AZD 20, mit einem Winkel von γ=50° oder kleiner auf den Stumpfstoß 3 oder das Werkstück 1, 2 auf.

Wie anhand von Fig. 4 illustriert wird, kann der Winkel γ kleiner sein als β-α, weil in manchen Varianten der abschmelzende Zusatzdraht, AZD 20, so weit vor die Drahtendenführung 123 der Zusatz-Drahtzuführeinrichtung 120 gefördert S03 wird, dass er sich vorteilhaft an dem Werkstück 1, 2 in Richtung der lichtbogentragenden abschmelzenden Drahtelektrode, LBTAD 10, zu biegen beginnt und damit γ<β-α gilt. Mit anderen Worten kann der AZD in diesem Fall noch flacher auf das Werkstück 1, 2 auftreffen als die zweite Förderrichtung F2. Auf diese Weise kann die Kraftkomponente KK der Gegenkraft GK in Richtung der Fügenaht weiter erhöht werden. In Fig. 4 beispielsweise beträgt β=80° und α=30°, aber γ=35°, d.h., dass sich der AZD um 15° gebogen hat.

Der abschmelzende Zusatzdraht, AZD 20, kann auch derart geführt werden, dass er sich zwischen der Drahtendenführung 123 und dem Werkstück 1, 2 mit einem Krümmungsradius R durchbiegt, welcher vorteilhaft zwischen 50 mm und 350 mm, bevorzugt zwischen 150 mm und 250 mm liegt.

Sowohl in Fig. 3 als auch in Fig. 4 ist der Abstand Δ zwischen den Berührungspunkten der lichtbogentragenden abschmelzenden Drahtelektrode, LBTAD 10 einerseits und des abschmelzenden Zusatzdrahts, AZD 20, andererseits mit dem Werkstück 1, 2 eingezeichnet. Der Abstand Δ beträgt mindestens 1 mm, bevorzugt mindestens 4 mm, besonders bevorzugt mindestens 6 mm.

Fig. 5A bis Fig. 7B zeigen jeweils zwei Graphen zur Erläuterung möglicher Varianten für das erfindungsgemäße Metall-Schutzgas-Lichtbogenfügegerät, MSLBFG, insbesondere das Metall-Schutzgas-Schweißgerät, MSSG 100, sowie für Ausführungsformen des erfindungsgemäßen Verfahrens. Die Teilfigur A zeigt hierbei jeweils den zeitlichen Verlauf der ersten mittleren Vorschubgeschwindigkeit Vd_LBTAD der lichtbogentragenden abschmelzenden Drahtelektrode, LBTAD 10, und die Teilfigur B jeweils den zeitlichen Verlauf der zweiten mittleren Vorschubgeschwindigkeit Vd_AZD des abschmelzenden Zusatzdrahts, AZD 20. Es sind beispielhafte Zahlenwerte in m/min angegeben, welche jedoch nur exemplarisch sind.

Fig. 5A und 5B illustrieren eine Variante, bei der die erste Drahtvorschubgeschwindigkeit Vd_LBTAD gemäß unterschiedlichen (Füge-, bzw. Schweiß-) Prozessphasen eingestellt wird, nämlich periodisch abwechselnd von einem vergleichsweise höheren Drahtvorschubgeschwindigkeitswert (welcher insbesondere mit einem vergleichsweise höheren Schweißstrom an dem Lichtbogen 4 einhergeht) zu einem vergleichsweise niedrigeren Drahtvorschubgeschwindigkeitswert (welcher insbesondere mit einem vergleichsweise niedrigeren Schweißstrom an dem Lichtbogen 4 einhergeht) und zurück, beispielsweise im Rahmen eines Puls-Verfahren, insbesondere eines Synchropuls-Verfahrens.

Der niedrigere Drahtvorschubgeschwindigkeitswert kann dabei positiv sein, oder alternativ auch null sein (nicht dargestellt). Dadurch kann eine geschuppte Schweißnaht besser erstellt werden. Ist die erste mittlere Drahtvorschubgeschwindigkeit Vd_LBTAD gleich null, ist typischerweise der Lichtbogen 4 erloschen, d.h., bei dieser Variante wechseln sich Prozessphasen mit und ohne Lichtbogen 4 ab. Ist die erste mittlere Drahtvorschubgeschwindigkeit Vd_LBTAD gleich null (oder gering), und die zweite mittlere Drahtvorschubgeschwindigkeit Vd_AZD positiv, kann eine stärkere Schweißnahtschuppung hergestellt werden, was häufig erwünscht ist.

Wie aus Fig. 5B ersichtlich ist, wird bei dieser Variante die zweite mittleren Drahtvorschubgeschwindigkeit Vd_AZD synchron zu den Prozessphasen der ersten mittleren Drahtvorschubgeschwindigkeit Vd_LBTAD eingestellt, wobei jeweils der höhere Drahtvorschubgeschwindigkeitswert der ersten mittleren Drahtvorschubgeschwindigkeit Vd_LBTAD mit einem entsprechenden höheren Drahtvorschubgeschwindigkeitswert der zweiten mittleren Drahtvorschubgeschwindigkeit Vd_AZD einhergeht, und der jeweils niedrigere Drahtvorschubgeschwindigkeitswert der ersten mittleren Drahtvorschubgeschwindigkeit Vd_LBTAD mit einem entsprechenden niedrigeren Drahtvorschubgeschwindigkeitswert der zweiten mittleren Drahtvorschubgeschwindigkeit Vd_AZD einhergeht. In Varianten, in denen der niedrigere Drahtvorschubgeschwindigkeitswert der ersten mittleren Drahtvorschubgeschwindigkeit Vd_LBTAD null beträgt, kann der Drahtvorschubgeschwindigkeitswert der zweiten mittleren Drahtvorschubgeschwindigkeit Vd_AZD positiv sein, oder ebenfalls null betragen.

Die erste mittlere Drahtvorschubgeschwindigkeit Vd_LBTAD ist typischerweise hoch (eingestellt), wenn die Abschmelzleistung hoch (eingestellt) ist, mit welcher die lichtbogentragende abschmelzende Drahtelektrode, LBTAD 10, abgeschmolzen wird, damit stets genügend Material der LBTAD 10 zum Abschmelzen nachgefördert wird, und der Lichtbogen 4 nicht abreißt. Typischerweise wird hingegen die erste mittlere Drahtvorschubgeschwindigkeit Vd_LBTAD niedrig (eingestellt), wenn die Abschmelzleistung niedrig (eingestellt) ist, damit jeder Fügestelle entlang der Fügenaht genug Material zugeführt wird. Durch die synchrone Einstellung der zweiten mittleren Drahtvorschubgeschwindigkeit Vd_AZD kann jeweils eine entsprechende optimale Fügegeschwindigkeit eingestellt werden.

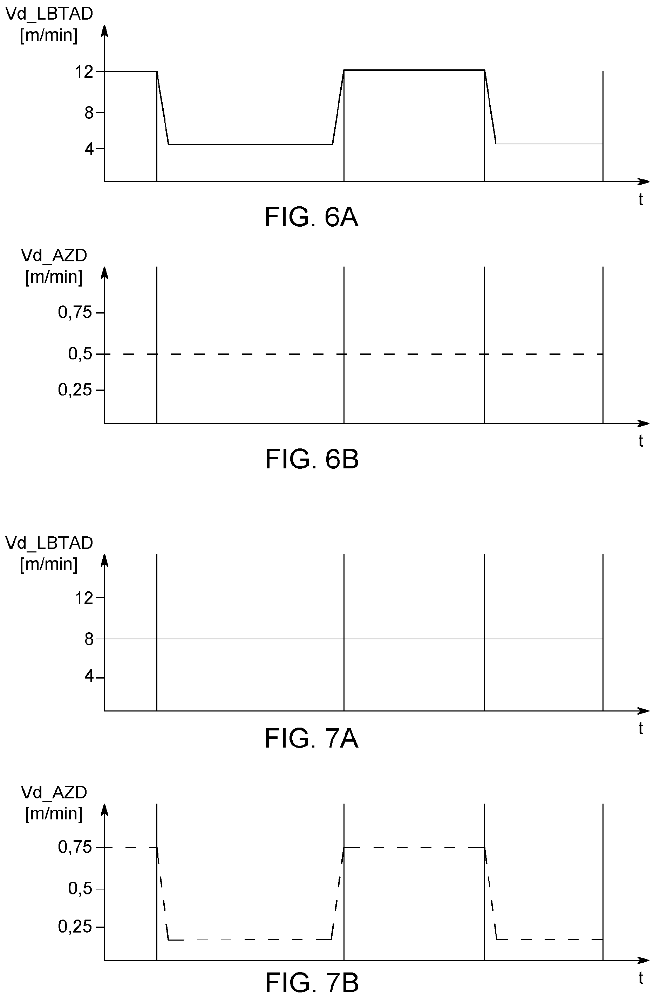

Fig. 6A und 6B illustrieren eine Variante, bei der die erste mittlere Drahtvorschubgeschwindigkeit Vd_LBTAD wie in Fig. 5A eingestellt wird (d.h., pulsierend), während die zweite mittlere Drahtvorschubgeschwindigkeit Vd_AZD konstant bleibt. Somit wird trotz unterschiedlicher Prozessphasen - eine gleichbleibende optimale Fügegeschwindigkeit vorgegeben oder eingestellt.

Fig. 7A und 7B illustrieren eine Variante, bei der die erste mittlere Drahtvorschubgeschwindigkeit Vd_LBTAD konstant bleibt, während die zweite mittlere Drahtvorschubgeschwindigkeit Vd_AZD periodische Prozessphasen aufweist. Somit wird durch die Gegenkraft trotz gleichförmiger Prozessphase an der lichtbogentragenden abschmelzenden Drahtelektrode, LBTAD 10, eine sich periodisch (hier zwischen zwei Werten) verändernde Fügegeschwindigkeit vorgegeben oder eingestellt.

Die Varianten gemäß Fig. 5A bis Fig. 7B oder weitere derartige Varianten können jeweils im Rahmen des erfindungsgemäßen Verfahrens durchgeführt werden, oder die Haupt-Drahtzuführeinrichtung 110 und die Zusatz-Drahtzuführeinrichtung 120 des erfindungsgemäßen Metall-Schutzgas-Lichtbogenfügegeräts, MSLBFG, oder des erfindungsgemäßen Zusatzgeräts, können entsprechend eingerichtet sein.

Die vorstehende Beschreibung der offenbarten Ausführungsformen enthält lediglich Beispiele für mögliche Umsetzungen, die beschrieben werden, um einen Fachmann in die Lage zu versetzen, die vorliegende Erfindung herzustellen oder verwenden zu können. Verschiedene Variationen und Modifikationen dieser Ausführungsformen sind für den Fachmann - nach Kenntnis der vorliegenden Erfindung - leicht ersichtlich, und die hierin definierten allgemeinen Prinzipien können auf andere Ausführungsformen angewendet werden, ohne vom Umfang der vorliegenden Offenbarung abzuweichen.

Somit soll die vorliegende Erfindung nicht auf die hierin gezeigten, spezifischen Ausführungsformen beschränkt sein, sondern ihr soll der breiteste Umfang zugestanden werden, der mit den hierin offenbarten Prinzipien und Merkmalen übereinstimmt.

### Bezugszeichenliste

1 erster Werkstückteil
2 zweiter Werkstückteil
3 Stumpfstoß
4 Lichtbogen
5 Schutzgas
10 lichtbogentragende abschmelzende Drahtelektrode LBTAD
20 abschmelzender Zusatzdraht, AZD
100 Metall-Schutzgas-Schweißgerät, MSSG
110 Haupt-Drahtzuführeinrichtung
111 Schutzgasdüse
112 Handhabungseinheit / Schweißbrenner
113 Drahtendenführung der Haupt-Drahtzuführeinrichtung / Kontaktrohr
120 Zusatz-Drahtzuführeinrichtung
123 Drahtendenführung der Zusatz-Drahtzuführeinrichtung
130 Halterung
140 Steuereinrichtung
141 Benutzerschnittstelle
142 Anpassungsmodul
143 Lichtbogen-Detektionsmodul
α Winkel zwischen der ersten Förderrichtung und der zweiten Förderrichtung
β Winkel zwischen der Fügenaht und der lichtbogentragenden abschmelzenden Drahtelektrode
γ Winkel zwischen dem abschmelzenden Zusatzdraht und dem Werkstück
Δ Abstand zwischen den Berührungspunkten der Elektroden mit dem Werkstück
F1 erste Förderrichtung
F2 zweite Förderrichtung
FD Fügerichtung
GK Gegenkraft
K Kraft
KK Kraftkomponente parallel zu Fügerichtung
R Krümmungsradius des abschmelzenden Zusatzdrahts
S01..S07
Verfahrensschritte

## Patentansprüche

1. Metall-Schutzgas-Lichtbogenfügegerät (100) für das Hand-Lichtbogenfügen, umfassend:
- eine Handhabungseinheit (112);
- eine Haupt-Drahtzuführeinrichtung (110) zum Fördern einer lichtbogentragenden abschmelzenden Drahtelektrode, LBTAD (10), wobei zumindest eine Drahtendenführung (113) der Haupt-Drahtzuführeinrichtung (110) in die Handhabungseinheit (112) integriert ist; und
- eine mit der Handhabungseinheit (112) verbundene Zusatz-Drahtzuführeinrichtung (120) zum Fördern eines abschmelzenden Zusatzdrahts, AZD (20);
- wobei eine Drahtendenführung (123) der Zusatz-Drahtzuführeinrichtung (120) derart angeordnet und eingerichtet ist, dass der abschmelzende Zusatzdraht, AZD (20), bei dem Hand-Lichtbogenfügen an einem zu fügenden Werkstück (1, 2) derart auftrifft, dass er, während er angeschmolzen wird, auf das Werkstück (1, 2) eine Kraft (K) ausübt und somit eine Gegenkraft (GK) auf die Handhabungseinheit (112) erzeugt.

2. Metall-Schutzgas-Lichtbogenfügegerät (100) gemäß Patentanspruch 1, wobei die Haupt-Drahtzuführeinrichtung (110) zum Fördern der lichtbogentragenden abschmelzenden Drahtelektrode, LBTAD (10), entlang einer ersten Förderrichtung (F1) eingerichtet ist und die Zusatz-Drahtzuführeinrichtung (120) zum Fördern des abschmelzenden Zusatzdrahts, AZD (20), entlang einer zweiten Förderrichtung (F2) eingerichtet ist, und wobei die zweite Förderrichtung (F2) von der ersten Förderrichtung (F1) verschieden ist.

3. Metall-Schutzgas-Lichtbogenfügegerät (100) nach Anspruch 2,
wobei die erste Förderrichtung (F1) und die zweite Förderrichtung (F2) zueinander in einem Winkel (α) zwischen 10° und 80° stehen, insbesondere in einem Winkel (α) zwischen 25° und 70°, besonders bevorzugt in einem Winkel (α) zwischen 30 und 60°.

4. Metall-Schutzgas-Lichtbogenfügegerät (100) nacheinem der Ansprüche 1 bis 3,
wobei die Drahtendenführung (113) der Haupt-Drahtzuführeinrichtung (110) und die Drahtendenführung (123) der Zusatz-Drahtzuführeinrichtung (120) zueinander derart angeordnet sind, dass die lichtbogentragende abschmelzende Drahtelektrode, LBTAD (10), und der abschmelzende Zusatzdraht, AZD (20), während des Hand-Lichtbogenfügens in einem Abstand (Δ) von mindestens 1 mm, bevorzugt mindestens 4 mm, besonders bevorzugt mindestens 6 mm, voneinander mit dem Werkstück (1, 2) in Kontakt kommen.

5. Metall-Schutzgas-Lichtbogenfügegerät (100) nach einem der Ansprüche 1 bis 4,
wobei die Haupt-Drahtzuführeinrichtung (110) und die Zusatz-Drahtzuführeinrichtung (120) derart eingerichtet sind, dass die Haupt-Drahtzuführeinrichtung (110) die lichtbogentragende abschmelzende Drahtelektrode, LBTAD (10), während des Schweißens mit einer ersten mittleren Vorschubgeschwindigkeit fördert und die Zusatz-Drahtzuführeinrichtung (120) den abschmelzenden Zusatzdraht, AZD (20), mit einer zweiten mittleren Vorschubgeschwindigkeit fördert, wobei sich die erste und die zweite mittlere Vorschubgeschwindigkeit zeitweise oder stets voneinander unterscheiden.

6. Metall-Schutzgas-Lichtbogenfügegerät (100) nach Anspruch 5,
wobei die erste und/oder die zweite mittlere Drahtvorschubgeschwindigkeit nicht-konstant ist,
wobei insbesondere die erste und/oder die zweite mittlere Drahtvorschubgeschwindigkeit zumindest abschnittsweise periodisch beschleunigt und verzögert wird.

7. Metall-Schutzgas-Lichtbogenfügegerät (100) nach einem der Ansprüche 4 bis 6,
wobei die erste mittlere Drahtvorschubgeschwindigkeit zwischen dem 1,5-fachen und dem 150-fachen der zweiten mittleren Drahtvorschubgeschwindigkeit beträgt, insbesondere zwischen dem 20-fachen und dem 40-fachen.

8. Metall-Schutzgas-Lichtbogenfügegerät (100) nach einem der Ansprüche 5 bis 7,
wobei die Haupt-Drahtzuführeinrichtung (110) dazu eingerichtet ist, die erste mittlere Drahtvorschubgeschwindigkeit gemäß unterschiedlichen Prozessphasen unterschiedlich einzustellen, und
wobei insbesondere die Zusatz-Drahtzuführeinrichtung (120) dazu eingerichtet ist, die zweite mittlere Drahtvorschubgeschwindigkeit synchronisiert zu den Prozessphasen der Haupt-Drahtzuführeinrichtung (110) anzupassen.

9. Metall-Schutzgas-Lichtbogenfügegerät (100) nach Anspruch 3 oder Anspruch 3 in Kombination mit einem der Ansprüche 4 bis 8,
umfassend eine verstellbare Halterung (130), über welche die Drahtendenführung (123) der Zusatz-Drahtzuführeinrichtung (120) mit der Handhabungseinheit (112) gekoppelt ist, und mittels welcher der Winkel (α) zwischen der ersten Förderrichtung (F1) und der zweiten Förderrichtung (F2) einstellbar ist.

10. Metall-Schutzgas-Lichtbogenfügegerät (100) nach einem der Ansprüche 1 bis 9,
ferner umfassend eine Benutzerschnittstelle (141) und ein Anpassungsmodul (142), wobei mittels der Benutzerschnittstelle (141) mindestens ein Parameter einer durchzuführenden Fügeaufgabe, insbesondere eine Nahtdicke, einstellbar und/oder eingebbar ist; und
wobei das Anpassungsmodul (142) dazu eingerichtet ist, die Haupt-Drahtzuführeinrichtung (110) und/oder die Zusatz-Drahtzuführeinrichtung (120) in Abhängigkeit von dem eingestellten und/oder eingegebenen mindestens einen Parameter zu steuern, insbesondere eine jeweilige mittlere Drahtvorschubgeschwindigkeit einzustellen.

11. Metall-Schutzgas-Lichtbogenfügegerät (100) nach einem der Ansprüche 1 bis 10,
ferner umfassend eine Steuereinrichtung (140), mittels welcher sowohl die Haupt-Drahtzuführeinrichtung (110) als auch die Zusatz-Drahtzuführeinrichtung (120), insbesondere miteinander koordiniert, steuerbar sind.

12. Metall-Schutzgas-Lichtbogenfügegerät (100) nach Anspruch 11,
wobei die Steuereinrichtung (140) ein Lichtbogen-Detektionsmodul (143) aufweist, mittels welchem feststellbar ist, ob aktuell ein Lichtbogen (4) an der lichtbogentragenden abschmelzenden Drahtelektrode, LBTAD (10), brennt; und
wobei die Steuereinrichtung (140) derart eingerichtet ist, die Zusatz-Drahtzuführeinrichtung (120) zu steuern, den abschmelzenden Zusatzdraht, AZD (20), höchstens dann zu fördern, wenn gemäß dem Lichtbogen-Detektionsmodul (143) aktuell ein Lichtbogen(4) brennt.

13. Zusatzgerät für ein Metall-Schutzgas-Lichtbogenfügegerät für das Hand-Lichtbogenfügen, umfassend
eine Halterung (130), welche an einer Handhabungseinheit (112) eines Metall-Schutzgas-Lichtbogenfügegeräts (100) für das Hand-Lichtbogenfügen mit einer Drahtendenführung (113) einer Haupt-Drahtzuführeinrichtung (110) zum Fördern, entlang einer ersten Förderrichtung (F1), einer lichtbogentragenden abschmelzenden Drahtelektrode, LBTAD (10), anbringbar ist,
und eine mit der Halterung (130) verbundene Drahtendenführung (123) einer Zusatz-Drahtzuführeinrichtung (120) zum Fördern eines abschmelzenden Zusatzdrahts, AZD (20), entlang einer zweiten Förderrichtung (F2),
wobei die Halterung (130) und die Drahtendenführung (123) der Zusatz-Drahtzuführeinrichtung (120) derart ausgebildet und zueinander angeordnet sind, dass, wenn die Halterung (130) an der Handhabungseinheit (112) des Metall-Schutzgas-Lichtbogenfügegeräts (100) angebracht ist, die erste Förderrichtung (F1) und die zweite Förderrichtung (F2) zueinander in einem Winkel (α) zwischen 10° und 80° stehen.

14. Verfahren zum händischen Metall-Schutzgas-Lichtbogenfügen, umfassend:
- Fördern (S01) einer lichtbogentragenden abschmelzenden Drahtelektrode, LBTAD (10) durch eine Haupt-Drahtzuführeinrichtung (110) eines Metall-Schutzgas-Lichtbogenfügegeräts (100), wobei eine Drahtendenführung (113) der Haupt-Drahtzuführeinrichtung (110) in eine Handhabungseinheit (112) des Metall-Schutzgas-Lichtbogenfügegeräts (100) integriert ist;
- Erzeugen (S02) eines Lichtbogens (4) an der lichtbogentragenden abschmelzenden Drahtelektrode, LBTAD (10);
- Fördern (S03) eines abschmelzenden Zusatzdrahts, AZD (20) durch eine Zusatz-Drahtzuführeinrichtung (120), welche eine Drahtendenführung (123) aufweist, welche mit der Handhabungseinheit (112) verbunden ist;
- händisches Führen (S04) der Handhabungseinheit (112) in einer Fügerichtung (FD) entlang einer zu erzeugenden Fügenaht an einem Werkstück (1, 2), wobei der abschmelzende Zusatzdraht, AZD (20), derart an das Werkstück (1, 2) herangeführt wird, dass eine Kraftkomponente (KK) einer von dem abschmelzenden Zusatzdraht, AZD (20), auf das Werkstück (1, 2) ausgeübten Kraft (K) eine Gegenkraft (GK) auf die Handhabungseinheit (112) in die Fügerichtung (FD) bewirkt.

15. Verfahren nach Anspruch 14,
wobei eine Fügegeschwindigkeit, mit welcher die Handhabungseinheit (112) in die Fügerichtung (FD) geführt wird, im Bereich von ±20% um eine mittlere Drahtvorschubgeschwindigkeit der Zusatz-Drahtzuführeinrichtung (120) liegt.

16. Verfahren nach Anspruch 14 oder 15,
wobei die zu erzeugende Fügenaht Kanten aus Stahl und/oder einer Stahllegierung verbindet, insbesondere im Stumpfstoß oder einer Kehlnaht(3), jeweils mit oder ohne Fase.
